# EUROPEAN PATENT APPLICATION

(11) **EP 4 668 832 A1**
(43) Date of publication of application: **24.12.2025**
(21) Application number: 24766377.6
(22) Date of filing: 01.03.2024
(51) Int. Cl.: H04W 24/08, H04W 4/02

(54) **SENSING METHOD, AND APPARATUS**

(30) Priority: 06.03.2023 CN 202310242160
(71) Applicant: Huawei Technologies Co., Ltd., Shenzhen, Guangdong 518129 (CN)
(72) Inventor: QIAN, Bin, Shenzhen, Guangdong 518129 (CN); PENG, Xiaohui, Shenzhen, Guangdong 518129 (CN); LIU, Chenchen, Shenzhen, Guangdong 518129 (CN); HUANG, Lei, Shenzhen, Guangdong 518129 (CN); WU, Kuan, Shenzhen, Guangdong 518129 (CN); YANG, Xun, Shenzhen, Guangdong 518129 (CN)
(74) Representative: Goddar, Heinz J.
(86) International application number: PCT/CN2024/079734
(87) International publication number: WO 2024/183661

(57) **Abstract**

Embodiments of this application provide a sensing method and an apparatus, to implement sensing through frequency stitching. A second device sends a first message, and a first device receives the first message. The first message includes first information, the first information indicates a feedback policy for a sensing result corresponding to a plurality of frequency bands, and the plurality of frequency bands are used for frequency stitching. The first device sends a second message to the second device based on the first message. The second message includes a sensing result corresponding to at least one of the plurality of frequency bands. In this solution, reliability of implementing sensing through frequency stitching can be improved, and sensing performance of a UWB system can be improved.

## Description

### CROSS-REFERENCE TO RELATED APPLICATIONS

This application claims priority to Chinese Patent Application No. 202310242160.6, filed with the China National Intellectual Property Administration on March 6, 2023 and entitled "SENSING METHOD AND APPARATUS", which is incorporated herein by reference in its entirety.

### TECHNICAL FIELD

Embodiments of this application relate to the wireless communication field, and in particular, to a sensing method and an apparatus.

### BACKGROUND

One of key topics of UWB technologies is implementing sensing (sensing) using an ultra-wideband (ultra-wideband, UWB) signal. A principle of the sensing is extracting information such as a distance, an angle, or a speed of a target by detecting an echo of the UWB signal on the target. Usually, sensing performance is directly proportional to an effective bandwidth of the UWB signal, that is, a larger effective bandwidth indicates higher sensing precision. However, during actual application, capabilities of different devices are different. Some UWB devices with low costs and low power consumption are limited by performance of an analog-to-digital converter (analog-to-digital converter, ADC), and cannot process a large-bandwidth UWB signal. In this case, a frequency stitching technology may be used. To be specific, frequency bands whose frequencies overlap in frequency domain are stitched into a large bandwidth, to implement sensing on the large bandwidth.

However, there is no specific solution for implementing sensing in a UWB system through frequency stitching, and reliability of frequency stitching is low. Consequently, sensing performance of the UWB system is limited.

### SUMMARY

Embodiments of this application provide a sensing method and an apparatus, to implement sensing through frequency stitching in a UWB system, and improve sensing performance of the UWB system.

According to a first aspect, a sensing method is provided, and includes: A first device receives a first message from a second device. The first message includes first information, the first information indicates a feedback policy for a sensing result corresponding to a plurality of frequency bands, and the plurality of frequency bands are used for frequency stitching. The first device sends a second message to the second device based on the first message. The second message includes a sensing result corresponding to at least one of the plurality of frequency bands. Optionally, adjacent frequency bands in the plurality of frequency bands overlap in terms of frequency. Optionally, the frequency band is a frequency band in a UWB system. Optionally, the second device is an initiator, and the first device is a responder.

In embodiments of this application, the second device may indicate, based on the first information carried in the first message, the feedback policy for the a sensing result corresponding to the plurality of frequency bands used for frequency stitching. Further, the first device may feed back, to the second device according to the feedback policy indicated by the second device, the sensing result corresponding to the at least one of the plurality of frequency bands, to improve reliability of implementing sensing through frequency stitching, and improve sensing performance of the UWB system.

In embodiments of this application, there may be a plurality of possible feedback policies. The following enumerates several of the possibilities.
1. The first information indicates the first device to feed back a channel impulse response CIR of any one of the plurality of frequency bands to the second device after the first device receives a sensing packet on the any frequency band; or
2. the first information indicates the first device to feed back a CIR of at least one of the plurality of frequency bands to the second device after the first device receives sensing packets on all of the plurality of frequency bands; or
3. the first information indicates the first device to feed back, to the second device after the first device completes any time of frequency stitching, a CIR of a large bandwidth obtained through the any time of frequency stitching, where the large bandwidth obtained through the any time of frequency stitching is determined based on a part or all of the plurality of frequency bands; or
4. the first information indicates the first device to feed back, to the second device after the first device completes a plurality of times of frequency stitching, a CIR of a large bandwidth obtained through at least one of the plurality of times of frequency stitching, where a large bandwidth obtained through any one of the plurality of times of frequency stitching is determined based on a part or all of the plurality of frequency bands; or
5. the first information indicates the first device to feed back, to the second device after the first device performs frequency stitching on the plurality of frequency bands, a CIR of a large bandwidth obtained through frequency stitching; or
6. the first information indicates the first device to feed back target information to the second device after the first device determines the target information based on completion of frequency stitching on at least two of the plurality of frequency bands and a CIR of a large bandwidth obtained through frequency stitching.

It may be understood that the several possibilities are merely examples rather than limitations.

In a possible design, the first message further includes second information, and the second information indicates an initial phase of at least one sensing packet on the plurality of frequency bands; or an initial phase difference between two adjacent sensing packets on the plurality of frequency bands; or an initial phase difference between a 1^{st} sensing packet and a sensing packet other than the 1^{st} sensing packet on the plurality of frequency bands.

In this design, the second device sends the second information to the first device. Therefore, the first device can determine phase information of each frequency band, to support the first device in performing frequency stitching, and further improve reliability of sensing implemented through frequency stitching.

In a possible design, the first message further includes third information, and the third information indicates a configuration order of center frequencies or carrier frequencies of the frequency bands. For example, the center frequencies or the carrier frequencies of the plurality of frequency bands are in ascending order, or the center frequencies or the carrier frequencies of the plurality of frequency bands are in descending order. If the center frequencies or the carrier frequencies of the plurality of frequency bands are in ascending order, a center frequency or a carrier frequency of a 1^{st} frequency band in the plurality of frequency bands is the lowest. On the contrary, if the center frequencies or the carrier frequencies of the plurality of frequency bands are in descending order, a center frequency or a carrier frequency of a 1^{st} frequency band in the plurality of frequency bands is the highest.

Therefore, the first device and the second device transmit the sensing packet on a preset frequency band, to improve a success rate of sensing packet transmission, and further improve sensing reliability.

In a possible design, the first message further includes one or more of the following information: fourth information, indicating an identifier of the 1^{st} frequency band in the plurality of frequency bands; fifth information, indicating a frequency overlap rate between adjacent frequency bands in the plurality of frequency bands; and sixth information, indicating a total bandwidth of the plurality of frequency bands.

Therefore, the first device may determine, based on the third information, the fourth information, the fifth information, and the sixth information, a frequency domain resource used for sensing packet exchange, to improve reliability of receiving the sensing packet by the first device, and further improve sensing reliability.

In a possible design, the first message includes seventh information, and the seventh information indicates a quantity of sensing packets sent by the second device on a single frequency band in the plurality of frequency bands.

Therefore, the first device may determine the quantity of sensing packets on the single frequency band, to further improve reliability of receiving the sensing packet by the first device.

In a possible design, the first device receives and detects sensing packets on a first frequency band set. The first frequency band set includes at least two frequency bands. If a sensing result corresponding to a plurality of frequency bands detected by the first device meet a sensing requirement, the first device sends the second message to the second device. The second message includes the sensing result corresponding to the plurality of frequency bands detected by the first device, and the plurality of frequency bands are a part or all of frequency bands detected by the first device. If the sensing result corresponding to the plurality of frequency bands detected by the first device do not meet the sensing requirement, the first device sends indication information to the second device. The indication information indicates the second device to send sensing packets on a second frequency band set, the second frequency band set includes at least two frequency bands, and the frequency bands in the second frequency band set are different from the frequency bands in the first frequency band set.

Therefore, frequency band overheads and feedback overheads can be reduced while sensing precision is ensured.

In a possible design, at least one frequency band in the first frequency band set and at least one frequency band in the second frequency band set overlap in terms of frequency, and a frequency overlap rate between the at least one frequency band in the first frequency band set and the at least one frequency band in the second frequency band set is greater than a frequency overlap rate between adjacent frequency bands in the first frequency band set.

Therefore, as a quantity of sensing packets received by the first device increases, precision of a sensing result obtained by the first device also increases, to further improve reliability of sensing implemented through frequency stitching.

In a possible design, the first message further includes eighth information, and the eighth information indicates the sensing requirement.

Therefore, the first device may determine the sensing requirement, and further feed back the sensing result to the second device in time when the sensing requirement is met, to avoid a resource waste and improve sensing efficiency.

In a possible design, the second message further includes ninth information, and the ninth information indicates that the sensing result is a CIR of a frequency band on which frequency stitching is not performed; or a CIR of a large bandwidth obtained through frequency stitching; or target information determined based on a CIR of a large bandwidth obtained through frequency stitching.

Therefore, the second device can determine a type of content of the sensing result carried in the second message, to better calculate the target information, and improve sensing precision.

In a possible design, the second message further includes tenth information, and the tenth information further indicates the frequency band corresponding to the sensing result.

Therefore, the second device can determine the frequency band corresponding to the sensing result carried in the second message, to better calculate the target information, and improve sensing precision.

In a possible design, the tenth information includes an index of the frequency band corresponding to the sensing result; or the tenth information includes a bitmap, the bitmap includes a plurality of bits, the plurality of bits one-to-one correspond to the plurality of frequency bands, and the frequency band corresponding to the sensing result is indicated by a value of a bit in the bitmap. Certainly, this is not limited to the foregoing two manners.

In a possible design, the plurality of frequency bands one-to-one correspond to a plurality of time units, a sensing packet on each of the plurality of frequency bands is transmitted in a time unit corresponding to the frequency band, the second message further includes tenth information, and the tenth information indicates a time unit corresponding to the sensing result.

Therefore, the second device can determine, based on the time unit fed back by the first device, the frequency band corresponding to the sensing result carried in the second message, to better calculate the target information, and improve sensing precision.

In a possible design, the tenth information includes an index of the time unit corresponding to the sensing result; or the tenth information includes a bitmap, the bitmap includes a plurality of bits, the plurality of bits one-to-one correspond to the plurality of time units, and an index of the time unit corresponding to the sensing result is indicated by a value of a bit in the bitmap. Certainly, this is not limited to the foregoing two manners.

In a possible design, before receiving the first message from the second device, the first device may further send capability information of the first device to the second device. The capability information of the first device is used by the second device to determine the first message. The capability information may include one or more of the following: eleventh information, indicating that the first device supports or does not support receiving of sensing packets on the plurality of frequency bands; twelfth information, indicating that the first device supports or does not support frequency stitching; and thirteenth information, indicating a frequency band allowed by the first device for frequency stitching.

Therefore, it can be ensured that the solution of implementing sensing through frequency stitching is implemented only when the first device supports frequency stitching, to further improve reliability of sensing through frequency stitching.

According to a second aspect, a sensing method is provided, and includes: A second device sends a first message to a first device. The first message includes first information, the first information indicates a feedback policy for a sensing result corresponding to a plurality of frequency bands, and the plurality of frequency bands are used for frequency stitching. The second device receives a second message from the first device. The second message includes a sensing result corresponding to at least one of the plurality of frequency bands.

In a possible design, the first information indicates the first device to feed back a channel impulse response CIR of any one of the plurality of frequency bands to the second device after the first device receives a sensing packet on the any frequency band; or the first information indicates the first device to feed back a CIR of at least one of the plurality of frequency bands to the second device after the first device receives sensing packets on all of the plurality of frequency bands; or the first information indicates the first device to feed back, to the second device after the first device completes any time of frequency stitching, a CIR of a large bandwidth obtained through the any time of frequency stitching, where the large bandwidth obtained through the any time of frequency stitching is determined based on a part or all of the plurality of frequency bands; or the first information indicates the first device to feed back, to the second device after the first device completes a plurality of times of frequency stitching, a CIR of a large bandwidth obtained through at least one of the plurality of times of frequency stitching, where a large bandwidth obtained through any one of the plurality of times of frequency stitching is determined based on a part or all of the plurality of frequency bands; or the first information indicates the first device to feed back, to the second device after the first device performs frequency stitching on the plurality of frequency bands, a CIR of a large bandwidth obtained through frequency stitching; or the first information indicates the first device to feed back target information to the second device after the first device determines the target information based on completion of frequency stitching on at least two of the plurality of frequency bands and a CIR of a large bandwidth obtained through frequency stitching.

In a possible design, the first message further includes second information, and the second information indicates an initial phase of at least one sensing packet on the plurality of frequency bands; or an initial phase difference between two adjacent sensing packets on the plurality of frequency bands; or an initial phase difference between a 1^{st} sensing packet and a sensing packet other than the 1^{st} sensing packet on the plurality of frequency bands.

In a possible design, the first message further includes third information, and the third information indicates a configuration order of center frequencies or carrier frequencies of the plurality of frequency bands.

In a possible design, a change direction of the center frequencies or the carrier frequencies of the plurality of frequency bands is as follows: The center frequencies or the carrier frequencies of the plurality of frequency bands are in ascending order; or the center frequencies or the carrier frequencies of the plurality of frequency bands are in descending order.

In a possible design, the first message further includes one or more of the following information: fourth information, indicating an identifier of a 1^{st} frequency band in the plurality of frequency bands; fifth information, indicating a frequency overlap rate between adjacent frequency bands in the plurality of frequency bands; and sixth information, indicating a total bandwidth of the plurality of frequency bands.

In a possible design, the first message includes seventh information, and the seventh information indicates a quantity of sensing packets sent by the second device on a single frequency band in the plurality of frequency bands.

In a possible design, the first message further includes eighth information, and the eighth information indicates the sensing requirement.

In a possible design, the second message further includes ninth information, and the ninth information indicates that the sensing result is a CIR of a frequency band on which frequency stitching is not performed; or a CIR of a large bandwidth obtained through frequency stitching; or target information determined based on a CIR of a large bandwidth obtained through frequency stitching.

In a possible design, the second message further includes tenth information, and the tenth information further indicates the frequency band corresponding to the sensing result.

In a possible design, the tenth information includes an index of the frequency band corresponding to the sensing result; or the tenth information includes a bitmap, the bitmap includes a plurality of bits, the plurality of bits one-to-one correspond to the plurality of frequency bands, and the frequency band corresponding to the sensing result is indicated by a value of a bit in the bitmap.

In a possible design, the plurality of frequency bands one-to-one correspond to a plurality of time units, a sensing packet on each of the plurality of frequency bands is transmitted in a time unit corresponding to the frequency band, the second message further includes tenth information, and the tenth information indicates a time unit corresponding to the sensing result.

In a possible design, the tenth information includes an index of the time unit corresponding to the sensing result; or the tenth information includes a bitmap, the bitmap includes a plurality of bits, the plurality of bits one-to-one correspond to the plurality of time units, and an index of the time unit corresponding to the sensing result is indicated by a value of a bit in the bitmap.

In a possible design, before sending the first message to the first device, the second device may further receive capability information from the first device, and determine the first message based on the capability information of the first device. The capability information includes one or more of the following: eleventh information, indicating that the first device supports or does not support receiving of sensing packets on the plurality of frequency bands; twelfth information, indicating that the first device supports or does not support frequency stitching; and thirteenth information, indicating a frequency band allowed by the first device for frequency stitching.

For beneficial effect corresponding to the designs in the second aspect, refer to beneficial effect of the designs corresponding to the first aspect. Details are not described again.

According to a third aspect, a sensing method is provided, and includes: A first device receives a third message from a second device. The third message indicates a sending policy for sending sensing packets by the first device on a plurality of frequency bands, and the plurality of frequency bands are used for frequency stitching. The first device sends the sensing packets on the plurality of frequency bands based on the third message. Optionally, the frequency band is a frequency band in a UWB system. Optionally, the second device is an initiator, and the first device is a responder.

In embodiments of this application, the second device sends the third message to the first device, to indicate the sending policy for sending the sensing packets on the plurality of frequency bands by the first device, so that the first device can send the sensing packets on the plurality of frequency bands according to the sending policy indicated by the second device, to support the second device in implementing sensing through frequency stitching. This improves reliability of sensing implemented through frequency stitching, and improves sensing performance of the UWB system.

In a possible design, the third message includes fourteenth information, and the fourteenth information indicates a configuration order of center frequencies or carrier frequencies of the plurality of frequency bands. For example, the center frequencies or the carrier frequencies of the plurality of frequency bands are in ascending order, or the center frequencies or the carrier frequencies of the plurality of frequency bands are in descending order. If the center frequencies or the carrier frequencies of the plurality of frequency bands are in ascending order, a center frequency or a carrier frequency of a 1^{st} frequency band in the plurality of frequency bands is the lowest. On the contrary, if the center frequencies or the carrier frequencies of the plurality of frequency bands are in descending order, a center frequency or a carrier frequency of a 1^{st} frequency band in the plurality of frequency bands is the highest.

In a possible design, the third message includes one or more of the following information: fifteenth information, indicating an identifier of the 1^{st} frequency band in the plurality of frequency bands; sixteenth information, indicating a frequency overlap rate between adjacent frequency bands in the plurality of frequency bands; and seventeenth information, indicating a total bandwidth of the plurality of frequency bands.

Therefore, the first device may determine a frequency domain resource used to send the sensing packet, to improve reliability of sending the sensing packet by the first device and receiving the sensing packet by the second device, and further improve sensing reliability.

In a possible design, the third message includes eighteenth information, and the eighteenth information indicates a quantity of sensing packets sent by the first device on a single frequency band in the plurality of frequency bands.

Therefore, the first device may determine the quantity of sensing packets sent on the single frequency band, to further improve reliability of receiving the sensing packet by the first device.

According to a fourth aspect, a sensing method is provided, and includes: A second device sends a third message to a first device. The third message indicates a sending policy for sending sensing packets by the first device on a plurality of frequency bands, and the plurality of frequency bands are used for frequency stitching. The second device receives the sensing packets from the first device on the plurality of frequency bands.

In a possible design, the third message includes fourteenth information, and the fourteenth information indicates a configuration order of center frequencies or carrier frequencies of the plurality of frequency bands.

In a possible design, a change direction of the center frequencies or the carrier frequencies of the plurality of frequency bands is as follows: The center frequencies or the carrier frequencies of the plurality of frequency bands are in ascending order; or the center frequencies or the carrier frequencies of the plurality of frequency bands are in descending order.

In a possible design, the third message includes one or more of the following information: fifteenth information, indicating an identifier of a 1^{st} frequency band in the plurality of frequency bands; sixteenth information, indicating a frequency overlap rate between adjacent frequency bands in the plurality of frequency bands; and seventeenth information, indicating a total bandwidth of the plurality of frequency bands.

In a possible design, the third message includes eighteenth information, and the eighteenth information indicates a quantity of sensing packets sent by the first device on a single frequency band in the plurality of frequency bands.

For beneficial effect corresponding to the designs in the fourth aspect, refer to beneficial effect of the designs corresponding to the third aspect. Details are not described again.

According to a fifth aspect, a communication apparatus is provided. The apparatus includes a module, a unit, or a technical means used to perform the method in the first aspect or any possible design of the first aspect.

For example, the apparatus may include a transceiver unit and a processing unit. The transceiver unit is configured to receive a first message from a second device. The first message includes first information, the first information indicates a feedback policy for a sensing result corresponding to a plurality of frequency bands, and the plurality of frequency bands are used for frequency stitching. The processing unit is configured to generate a second message based on the first message, and control the transceiver unit to send the second message to the second device. The second message includes a sensing result corresponding to at least one of the plurality of frequency bands. The transceiver unit is further configured to send the second message.

According to a sixth aspect, a communication apparatus is provided. The apparatus includes a module, a unit, or a technical means used to perform the method in the second aspect or any possible design of the second aspect.

For example, the apparatus may include a transceiver unit and a processing unit. The processing unit is configured to generate a first message. The first message includes first information, the first information indicates a feedback policy fora sensing result corresponding to a plurality of frequency bands, and the plurality of frequency bands are used for frequency stitching. The transceiver unit is configured to send the first message to a first device, and receive a second message from the first device. The second message includes a sensing result corresponding to at least one of the plurality of frequency bands.

According to a seventh aspect, a communication apparatus is provided. The apparatus includes a module, a unit, or a technical means used to perform the method in the third aspect or any possible design of the third aspect.

For example, the apparatus may include a transceiver unit and a processing unit. The transceiver unit is configured to receive a third message from a second device. The third message indicates a sending policy for sending, on a plurality of frequency bands, sensing packets by a first device in which the apparatus is located, and the plurality of frequency bands are used for frequency stitching. The processing unit is configured to generate the sensing packets based on the third message, and control the transceiver unit to send the sensing packets on the plurality of frequency bands.

According to an eighth aspect, a communication apparatus is provided. The apparatus includes a module, a unit, or a technical means used to perform the method in the fourth aspect or any possible design of the fourth aspect.

For example, the apparatus may include a transceiver unit and a processing unit. The processing unit is configured to generate a third message. The third message indicates a sending policy for sending sensing packets by a first device on a plurality of frequency bands, and the plurality of frequency bands are used for frequency stitching.

The transceiver unit is configured to send the third message to the first device, and receive the sensing packets from the first device on the plurality of frequency bands.

According to a ninth aspect, a communication apparatus is provided, and includes a processor and an interface circuit. The processor is coupled to the interface circuit. The processor is configured to execute a computer program or instructions, so that the apparatus performs the method in the first aspect or any possible design of the first aspect, or the method in the second aspect or any possible design of the second aspect, or the method in the third aspect or any possible design of the third aspect, or the method in the fourth aspect or any possible design of the fourth aspect.

According to a tenth aspect, a computer-readable storage medium is provided, and includes a program or instructions. When the program or the instructions are run on a computer, the method in the first aspect or any possible design of the first aspect, or the method in the second aspect or any possible design of the second aspect, or the method in the third aspect or any possible design of the third aspect, or the method in the fourth aspect or any possible design of the fourth aspect is performed.

According to an eleventh aspect, a computer program product is provided. The computer program product includes computer program code or instructions, and when the computer program code or the instructions are run, the method in the first aspect or any possible design of the first aspect, or the method in the second aspect or any possible design of the second aspect, or the method in the third aspect or any possible design of the third aspect, or the method in the fourth aspect or any possible design of the fourth aspect is performed.

According to a twelfth aspect, a communication system is provided, and includes a second device and a first device. The first device is configured to perform the method in the first aspect or any possible design of the first aspect, and the second device is configured to perform the method in the second aspect or any possible design of the second aspect; or the first device is configured to perform the method in the third aspect or any possible design of the third aspect, and the second device is configured to perform the method in the fourth aspect or any possible design of the fourth aspect.

For beneficial effect corresponding to the designs of the fifth aspect to the twelfth aspect, refer to beneficial effect of the designs corresponding to the first aspect to the fourth aspect. Details are not described again.

### BRIEF DESCRIPTION OF DRAWINGS

FIG. 1 is a diagram of a star topology according to an embodiment of this application;
FIG. 2 is a diagram of a mesh topology according to an embodiment of this application;
FIG. 3 is a flowchart of a sensing method according to an embodiment of this application;
FIG. 4A to FIG. 4C are diagrams of several possible scheduling manners of a control message;
FIG. 5 is a diagram of a multi-layer frequency stitching solution according to an embodiment of this application;
FIG. 6 is a flowchart of another sensing method according to an embodiment of this application;
FIG. 7 is a diagram of a structure of a possible communication apparatus according to an embodiment of this application; and
FIG. 8 is a diagram of a structure of another possible communication apparatus according to an embodiment of this application.

### DESCRIPTION OF EMBODIMENTS

The following first explains some terms in embodiments of this application.
(1) Sensing may also be referred to as sensing measurement or radio sensing, and means that a transmitter and a receiver transmit a signal to implement an objective of discovering a target or determining a target status. UWB sensing means that a station (station, STA) with a UWB signal sensing capability uses a received UWB signal to detect a feature of an expected target in a given environment. For example, the feature includes one or more of a range, a speed, an angle, a motion, existence or proximity, a gesture, and the like. The target includes one or more of an object, a person, an animal, and the like. The environment includes one or more of a room, a house, a vehicle, an enterprise, and the like.

For example, the transmitter may send a UWB signal used for sensing measurement to the receiver, and the receiver may measure the signal, to obtain a channel estimation result, for example, a channel impulse response (channel impulse response, CIR). The receiver may perform sensing based on the CIR. Alternatively, the receiver may send the channel estimation result to the transmitter, and the transmitter performs target sensing or target status sensing based on the channel estimation result. For example, the receiver or the transmitter may process the CIR, to determine whether a moving object exists in the environment.

During specific implementation, sensing signals may be sent one by one in a form of a data packet, and therefore may also be referred to as sensing packets (sensing packet, SP).

In some embodiments, a sensing signal sent on a frequency band within a time period may be referred to as a sensing fragment (sensing fragment, SF), and each sensing fragment may include one or more sensing packets. It may be understood that when a quantity of sensing packets in the sensing fragment is determined, the sensing packet may be replaced with the sensing fragment.

In a sensing process, devices participating in sensing mainly include a sensing initiator, a sensing responder, a sensing transmitter, and a sensing receiver.

(2) The sensing initiator (sensing initiator) is also referred to as an initiator, or the like, and is a device that initiates a sensing procedure.

(3) The sensing responder (sensing responder) is also referred to as a sensing responder, or the like, and is a device that responds to sensing initiated by the sensing initiator and participates in sensing.

(4) The sensing transmitter (sensing transmitter) is also referred to as a transmitter, and is a device that sends a sensing signal. The sensing signal may be a signal used for sensing measurement.

(5) The sensing receiver (sensing receiver) is also referred to as a receiver, and is a device that receives the sensing signal. The sensing receiver may measure the sensing signal.

During specific implementation, the initiator may be used as a transmitter, and the responder may be used as a receiver; or the initiator may be used as a receiver, and the responder may be used as a transmitter.

(6) A frequency band may be a frequency domain range. For example, in a UWB system, a bandwidth of 499.2 MHz may be referred to as a frequency band.

(7) A time unit is a time range determined by duration. For example, the time unit is a frame, a subframe, a sensing slot, a sensing round, a sensing block, or a symbol. This is not limited in this application. For example, one slot may be duration of nine microseconds.

(8) In this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. In the text descriptions of this application, the character "/" usually represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

The technical solutions provided in this application are applicable to a wireless personal area network (wireless personal area network, WPAN) based on a UWB technology. For example, a method provided in this application is applicable to the Institute of Electrical and Electronics Engineers (Institute of Electrical and Electronics Engineers, IEEE) 802.15 series protocols, for example, the 802.15.4a protocol, the 802.15.4z protocol, the 802.15.4ab protocol, or a future generation of UWB WPAN standard. Examples are not enumerated herein. The method provided in this application may be further applied to various communication systems, for example, an Internet of things (Internet of things, IoT) system, vehicle to X (vehicle to X, V2X), and a narrowband Internet of things (narrowband Internet of things, NB-IoT) system, and is applied to a device in the vehicle to X, an Internet of things node, a sensor, or the like in the Internet of things, a smart camera, a smart remote control, and a smart water meter or electricity meter in a smart home, and a sensor in a smart city. The method provided in this application is also applicable to an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a long term evolution (long term evolution, LTE) system, a 5th generation (5th generation, 5G) communication system, a 6th generation (6th generation, 6G) communication system, or the like.

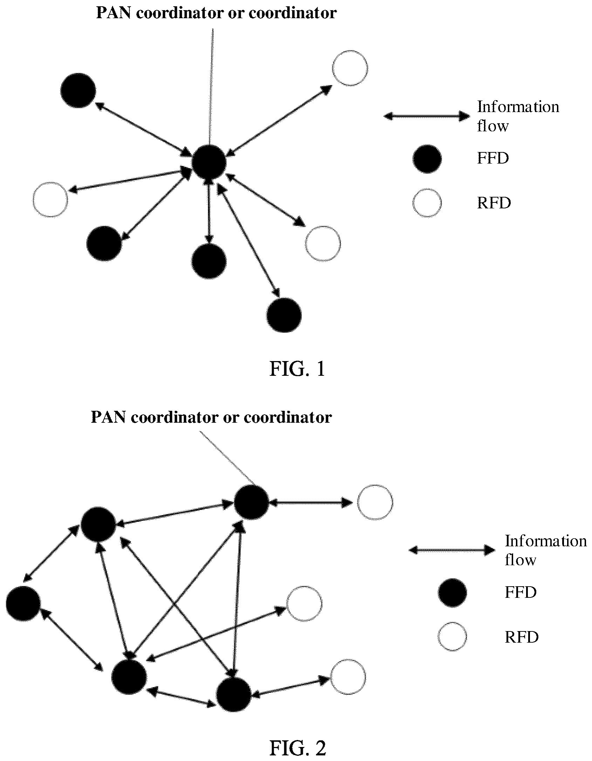

The technical solutions provided in embodiments of this application may operate in a star topology structure, a point-to-point topology structure, or a mesh topology structure. FIG. 1 is a diagram of a star topology according to an embodiment of this application. As shown in FIG. 1, in the star topology, a central node may control data communication between one or more other devices.

It may be understood that the point-to-point topology may be considered as a special mesh topology. The point-to-point topology is a structure of data communication between two devices. In the mesh topology structure, data communication may be performed between any two devices, as shown in FIG. 2.

Optionally, in FIG. 1 or FIG. 2, a black node is a full function device (full function device, FFD), and a white node is a reduced function device (reduced function device, RFD). In the UWB system, the FFD may be an anchor device, or a tag device with a strong computing capability, for example, a UWB tag carried on a smartphone. The RFD is a tag device with only some computing capabilities. In a possible implementation, the FFD may serve as a personal area network (personal area network, PAN) coordinator or a coordinator, and the RFD cannot serve as a PAN coordinator or a coordinator.

A UWB technology is a wireless carrier communication technology, which uses nanosecond-level narrow pulses to transmit data. The narrow pulses occupy a wide spectrum range and have extremely low radiation spectrum density. The UWB system has advantages such as high multi-path resolution, low power consumption, and high confidentiality. As the UWB technology is applied in the civil field, ultra-wideband wireless communication has become one of popular physical layer technologies for short-range and high-speed wireless networks.

The IEEE association has incorporated the UWB into the IEEE 802 series wireless standards, and has released the UWB-based WPAN standard IEEE 802.15.4a and the evolved version IEEE 802.15.4z of the IEEE 802.15.4a. In the communication, ranging, and sensing features, the UWB focuses more on ranging and sensing capabilities, and a single waveform may be used to implement sensing and ranging. A typical pulse waveform is a pulse waveform obtained by using a Butterworth (Butterworth) filter with an order of 8 and according to a Gaussian window function. The pulse waveform has a low side lobe peak, to facilitate a sensing function. In addition, a first-path signal of the pulse waveform is also significant, and is also applicable to a ranging function, and power spectral density of the waveform also meets a limitation specified in the 802.15.4z version, so that the waveform can be used to simultaneously implement sensing and ranging.

However, the existing IEEE 802.15.4z protocol does not support a service that uses a single waveform to simultaneously implement sensing and ranging. This causes extra signaling exchange overheads due to mutual switching and coordination between a sensing service and a ranging service of the UWB system, and reduces spectrum utilization.

In this case, the UWB system requires a large bandwidth to implement the sensing service, to improve sensing and ranging performance. However, the UWB system has a limited frequency band, and switching between large bandwidths has a high requirement on device capabilities and costs. Therefore, a frequency stitching technology may be used. Frequency bands with overlapping frequencies in frequency domain are stitched into a large bandwidth, to reduce device capabilities and costs, implement ranging and sensing on the large bandwidth, and improve ranging and sensing performance. However, there is no specific solution for a specific scheduling manner of frequency stitching, and consequently, sensing performance of the UWB system is limited.

In view of this, in the technical solutions provided in embodiments of this application, specific content of a message (for example, a control message or a feedback message) in frequency stitching is clearly defined, to support the UWB system in performing sensing through frequency stitching, and improve sensing performance of the UWB system.

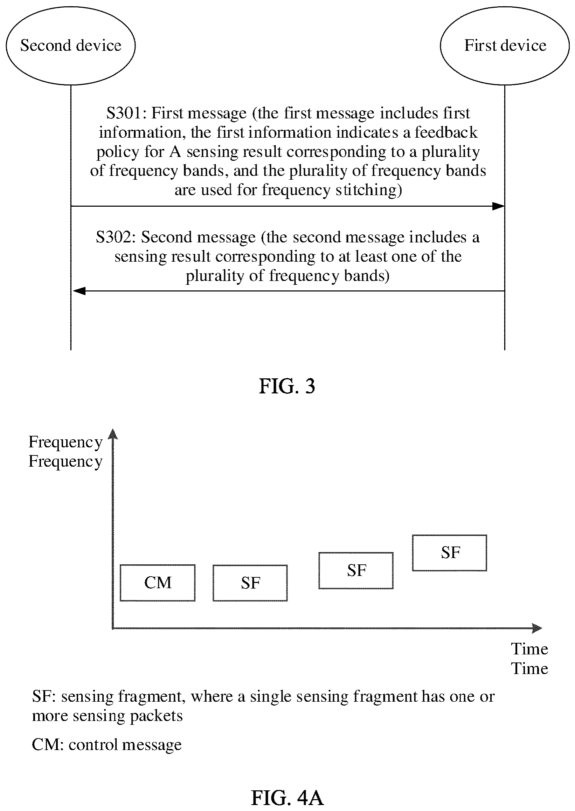

FIG. 3 is a flowchart of a sensing method according to an embodiment of this application. The method may be applied to the system shown in FIG. 1 or FIG. 2. In the method, an example in which a second device sends a sensing packet to a first device (it may be understood that, unless otherwise specified, the sensing packet in the following may be replaced with a sensing fragment) is used. The method includes the following steps.

S301: The second device sends a first message, and the first device receives the first message.

The first message includes first information, the first information indicates a feedback policy for a sensing result corresponding to a plurality of frequency bands, and the plurality of frequency bands are used for frequency stitching. The second device may be an initiator, and the first device may be a responder.

It may be understood that adjacent frequency bands in the plurality of frequency bands overlap in terms of frequency, to ensure that the plurality of frequency bands can be used for frequency stitching. An overlap rate may be 25%, 50%, 75%, or the like. This is not limited in this application. The adjacent frequency bands are frequency bands whose frequency ranges are adjacent. A sensing result may be a CIR, or target information, for example, a speed, a distance, and an angle of a target, determined based on a CIR. This is not limited in this application.

It may be understood that the feedback policy may include one or more aspects, for example, content of the sensing result fed back by the first device to the second device (for example, the content of the sensing result may be the CIR or the target information, and the content of the sensing result may correspond to a frequency band on which frequency stitching is not performed or a large bandwidth (which is also referred to as a large frequency band, a stitched frequency band, or the like) obtained through frequency stitching), and a manner in which the first device feeds back the sensing result to the second device (for example, the first device may perform feedback to the second device for one time or perform feed back to the second device for a plurality of times, and the first device feeds back the sensing result to the second device at a specific occasion).

The following enumerates several possible feedback policies.

Feedback policy 1: After receiving a sensing packet (or a sensing fragment) on any one of the plurality of frequency bands, the first device feeds back a channel impulse response CIR of the any frequency band to the second device.

In this case, the first device may perform feedback to the second device for a plurality of times. For example, the plurality of frequency bands include a frequency band 1, a frequency band 2, and a frequency band 3. The first device receives and detects a sensing packet 1 on the frequency band 1, to obtain a CIR of the frequency band 1, and then sends the CIR of the frequency band 1 to the second device. The first device receives and detects a sensing packet 2 on the frequency band 2, to obtain a CIR of the frequency band 2, and then feeds back the CIR of the frequency band 2 to the second device. The first device receives and detects a sensing packet 3 on the frequency band 3, to obtain a CIR of the frequency band 3, and then feeds back the CIR of the frequency band 3 to the second device.

It may be understood that in this case, after receiving a CIR of each frequency band, the second device may perform frequency stitching and determine the target information.

Feedback policy 2: After receiving sensing packets (or sensing fragments) on all of the plurality of frequency bands, the first device feeds back a CIR of at least one of the plurality of frequency bands to the second device.

For example, the plurality of frequency bands include a frequency band 1, a frequency band 2, and a frequency band 3. The first device receives and detects a sensing packet 1 on the frequency band 1, receives and detects a sensing packet 2 on the frequency band 2, and receives and detects a sensing packet 3 on the frequency band 3, to obtain a CIR of the frequency band 1, a CIR of the frequency band 2, and a CIR of the frequency band 3, and then feeds back the CIR of the frequency band 1, the CIR of the frequency band 2, and the CIR of the frequency band 3 to the second device.

In this case, after receiving a CIR of each frequency band, the second device may perform frequency stitching and determine the target information.

Feedback policy 3: After completing any time of frequency stitching, the first device feeds back, to the second device, a CIR of a large bandwidth (or a large frequency band) obtained through the any time of frequency stitching, where the large bandwidth obtained through the any time of frequency stitching is determined based on a part or all of the plurality of frequency bands.

For example, the first device may perform M times of frequency stitching on frequency bands in the plurality of frequency bands. After frequency stitching is completed each time, the first device sends, to the second device, a CIR of a large bandwidth (the large bandwidth is a large bandwidth obtained through frequency stitching, and the large bandwidth may also be referred to as a large frequency band, a stitched frequency band, or the like) obtained through current frequency stitching. The large bandwidth obtained through current frequency stitching is determined based on a part or all of the plurality of frequency bands, and M is a positive integer.

In some embodiments, when M is greater than 1, frequency stitching may be performed based on different frequency bands each time. For example, the plurality of frequency bands include a frequency band 1, a frequency band 2, a frequency band 3, and a frequency band 4. The first device receives and detects a sensing packet 1 on the frequency band 1, to obtain a CIR of the frequency band 1; receives and detects a sensing packet 2 on the frequency band 2, to obtain a CIR of the frequency band 2; stitches the frequency band 1 and the frequency band 2 into a large bandwidth 1; determines a CIR of the large bandwidth 1 based on the CIR of the frequency band 1 and the CIR of the frequency band 2; and feeds back the CIR of the large bandwidth 1 to the second device. The first device receives and detects a sensing packet 3 on the frequency band 3, to obtain a CIR of the frequency band 3; receives and detects a sensing packet 4 on the frequency band 4, to obtain a CIR of the frequency band 4; stitches the frequency band 3 and the frequency band 4 into a large bandwidth 2; determines a CIR of the large bandwidth 2 based on the CIR of the frequency band 3 and the CIR of the frequency band 4; and feeds back the CIR of the large bandwidth 2 to the second device.

In some embodiments, when M is greater than 1, frequency stitching may be performed based on frequency bands that are partially the same each time. For example, the plurality of frequency bands include a frequency band 1, a frequency band 2, and a frequency band 3. The first device receives and detects a sensing packet 1 on the frequency band 1, to obtain a CIR of the frequency band 1; receives and detects a sensing packet 2 on the frequency band 2, to obtain a CIR of the frequency band 2; stitches the frequency band 1 and the frequency band 2 into a large bandwidth 1; determines a CIR of the large bandwidth 1 based on the CIR of the frequency band 1 and the CIR of the frequency band 2; and feeds back the CIR of the large bandwidth 1 to the second device. The first device receives and detects a sensing packet 3 on the frequency band 3, to obtain a CIR of the frequency band 3; stitches the frequency band 2 and the frequency band 3 into a large bandwidth 2; determines a CIR of the large bandwidth 2 based on the CIR of the frequency band 2 and the CIR of the frequency band 3; and feeds back the CIR of the large bandwidth 2 to the second device.

It may be understood that one of the M times of frequency stitching may be performed based on all of the plurality of frequency bands. For example, the plurality of frequency bands include a frequency band 1, a frequency band 2, and a frequency band 3. After receiving and detecting sensing packets on the frequency band 1, the frequency band 2, and the frequency band 3, the first device stitches the frequency band 1, the frequency band 2, and the frequency band 3 into a large bandwidth, and feeds back, to the second device, a CIR of the large bandwidth obtained by stitching the frequency band 1, the frequency band 2, and the frequency band 3.

In this case, the second device may determine the target information based on the CIR, fed back by the first device, of the large bandwidth.

Feedback policy 4: After completing a plurality of times of frequency stitching, the first device feeds back, to the second device, a CIR of a large bandwidth (or a large frequency band) obtained through at least one of the plurality of times of frequency stitching, where a large bandwidth obtained through any one of the plurality of times of frequency stitching is determined based on a part or all of the plurality of frequency bands.

For example, the first device performs M times of frequency stitching on frequency bands in the plurality of frequency bands. After the M times of frequency stitching are completed, the first device feeds back, to the second device, a CIR of a large bandwidth obtained through each of at least one time of frequency stitching. The large bandwidth obtained through each time of frequency stitching is determined based on a part or all of the plurality of frequency bands, and M is a positive integer greater than 1.

For example, the plurality of frequency bands include a frequency band 1, a frequency band 2, a frequency band 3, and a frequency band 4. The first device receives and detects a sensing packet 1 on the frequency band 1, to obtain a CIR of the frequency band 1; receives and detects a sensing packet 2 on the frequency band 2, to obtain a CIR of the frequency band 2; stitches the frequency band 1 and the frequency band 2 into a large bandwidth 1; and determines a CIR of the large bandwidth 1 based on the CIR of the frequency band 1 and the CIR of the frequency band 2. The first device receives and detects a sensing packet 3 on the frequency band 3, to obtain a CIR of the frequency band 3; receives and detects a sensing packet 4 on the frequency band 4, to obtain a CIR of the frequency band 4; stitches the frequency band 3 and the frequency band 4 into a large bandwidth 2; determines a CIR of the large bandwidth 2 based on the CIR of the frequency band 3 and the CIR of the frequency band 4; and sends a feedback message to the second device, where the feedback message carries the CIR of the large bandwidth 1 and the CIR of the large bandwidth 2.

In addition, one of the plurality of times of frequency stitching may be performed based on all the plurality of frequency bands. For example, the plurality of frequency bands include a frequency band 1, a frequency band 2, and a frequency band 3. The first device receives and detects a sensing packet 1 and a sensing packet 2 on the frequency band 1 and the frequency band 2, and stitches the frequency band 1 and the frequency band 2 into a large bandwidth 1. However, a CIR of the large bandwidth obtained by stitching the frequency band 1 and the frequency band 2 does not meet a sensing requirement. The first device then receives and detects a sensing packet 3 on the frequency band 3, and stitches the frequency band 1, the frequency band 2, and the frequency band 3 into a large bandwidth. A CIR of the large bandwidth obtained by stitching the frequency band 1, the frequency band 2, and the frequency band 3 meets the sensing requirement. Therefore, the first device feeds back, to the second device, the CIR of the large bandwidth obtained by stitching the frequency band 1, the frequency band 2, and the frequency band 3.

In this case, the second device may determine the target information based on the CIR of the large bandwidth.

Feedback policy 5: After performing frequency stitching on the plurality of frequency bands, the first device feeds back, to the second device, a CIR of a large bandwidth (or a large frequency band) obtained through frequency stitching.

For example, after obtaining CIRs of all the plurality of frequency bands, the first device stitches all the plurality of frequency bands into a large bandwidth, and feeds back a CIR of the large bandwidth to the second device. For example, the plurality of frequency bands include a frequency band 1, a frequency band 2, and a frequency band 3. The first device sequentially receives and detects a sensing packet 1 on the frequency band 1, to obtain a CIR of the frequency band 1; receives and detects a sensing packet 2 on the frequency band 2, to obtain a CIR of the frequency band 2; receives and detects a sensing packet 3 on the frequency band 3, to obtain a CIR of the frequency band 3; stitches the frequency band 1, the frequency band 2, and the frequency band 3 into a large bandwidth; determines a CIR of the large bandwidth based on the CIR of the frequency band 1, the CIR of the frequency band 2, and the CIR of the frequency band 3; and feeds back, to the second device, the CIR of the large bandwidth obtained by stitching the frequency band 1, the frequency band 2, and the frequency band 3.

In this case, the second device may determine the target information based on the CIR of the large bandwidth.

Feedback policy 6: After determining the target information based on completion of frequency stitching on at least two of the plurality of frequency bands and a CIR of a large bandwidth (or a large frequency band) obtained through frequency stitching, the first device feeds back the target information to the second device.

For example, after obtaining CIRs of all the plurality of frequency bands, the first device stitches the plurality of frequency bands, and feeds back, to the second device, the target information determined based on a CIR of a large bandwidth obtained through frequency stitching.

For example, the plurality of frequency bands include a frequency band 1, a frequency band 2, and a frequency band 3. The first device sequentially receives and detects a sensing packet 1 on the frequency band 1, to obtain a CIR of the frequency band 1; receives and detects a sensing packet 2 on the frequency band 2, to obtain a CIR of the frequency band 2; receives and detects a sensing packet 3 on the frequency band 3, to obtain a CIR of the frequency band 3; stitches the frequency band 1, the frequency band 2, and the frequency band 3 into a large bandwidth; determines a CIR of the large bandwidth based on the CIR of the frequency band 1, the CIR of the frequency band 2, and the CIR of the frequency band 3; determines information such as the speed, the distance, or the angle of the target based on the CIR of the large bandwidth; and sends a feedback message to the second device, where the feedback message carries information such as the speed, the distance, or the angle of the target.

In this case, the second device may directly obtain the target information based on the feedback message.

It may be understood that the foregoing six feedback policies are merely examples, and an actual application is not limited thereto.

In some embodiments, the first message may be a control message (control message, CM) sent by the second device to the first device, and the control message indicates the second device and the first device to exchange information used for sensing. In some other embodiments, the first message may alternatively be a message sent by the second device to the first device in a connection setup phase, a capability exchange phase, or a sensing initiation phase between the second device and the first device. It may be understood that sending time of the first message is not limited in embodiments of this application.

For ease of description, the following mainly uses an example in which the first message is a control message. In the following, unless otherwise specified, the first message and the control message may be replaced with each other.

FIG. 4A shows a possible scheduling manner of a control message. The control message exists only on one frequency band, and a sensing packet (or a sensing fragment) may be transmitted on the frequency band on which the control message is located, or may be transmitted on another frequency band. The frequency band for transmitting the control message may usually be referred to as a main UWB channel (main UWB channel).

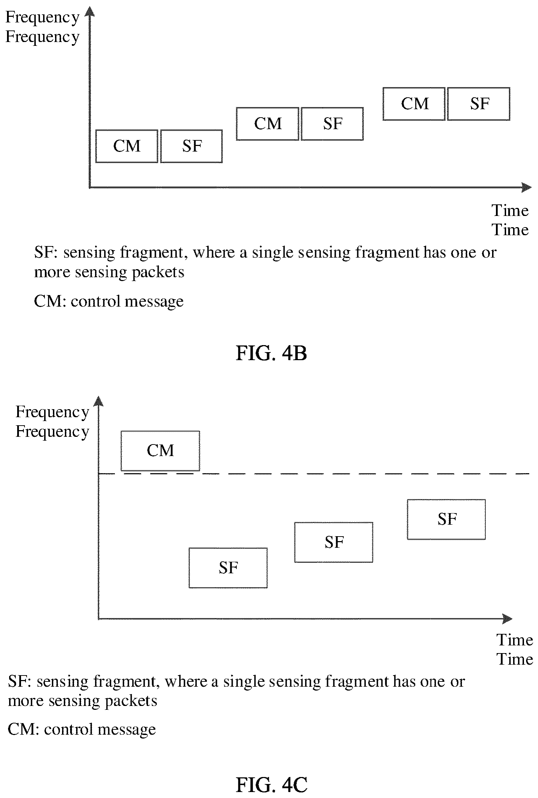

FIG. 4B shows another possible scheduling manner of a control message. The control message exists on each frequency band, and the control message on each frequency band is used to control transmission of a sensing packet (or a sensing fragment) on the frequency band.

FIG. 4C shows another possible scheduling manner of a control message. The control message exists only on one frequency band, and a sensing packet (or a sensing fragment) is transmitted on a frequency band other than the frequency band on which the control message is located. In this case, the frequency band on which the control message is located is a frequency band dedicated to the control message, and therefore may be referred to as a dedicated control channel (dedicated control channel).

It may be understood that the several scheduling manners of the control message provided in FIG. 4A to FIG. 4C are merely examples rather than limitations.

In an alternative design, the feedback policy for the sensing result corresponding to the plurality of frequency bands may not be indicated by the second device to the first device. For example, the feedback policy for the sensing result corresponding to the plurality of frequency bands may be determined by the second device and the first device through negotiation, or may be predefined, or may be pre-configured, or may be indicated by the first device to the second device.

S302: The first device sends a second message based on the first message, and the second device receives the second message, where the second message includes a sensing result corresponding to at least one of the plurality of frequency bands.

During specific implementation, the second device sends the sensing packet on the at least one of the plurality of frequency bands. After receiving and detecting the sensing packet (or the sensing fragment) on the at least one of the plurality of frequency bands, the first device generates, based on the feedback policy indicated by the first information, the sensing result corresponding to the at least one frequency band, and feeds back the second message including the sensing result to the second device.

The first device may receive the sensing packet after receiving the first message and before sending the second message, or the first device may receive the sensing packet before receiving the first message. This is not limited in this application. For example, when the first message is the control message, in addition to the first information, the first message may further carry indication information of a time-frequency resource for sending the sensing packet by the second device. After receiving the first message, the first device receives and detects the sensing packet on the corresponding time-frequency resource based on the first message, and sends the second message to the second device. For example, the first message is another message sent after the control message, and the control message carries indication information of a time-frequency resource for sending the sensing packet by the second device. After receiving the control message, the first device detects and receives the sensing packet on the corresponding time-frequency resource based on the indication information, of the time-frequency resource, carried in the control message; and after receiving the first message, sends the second message to the second device based on the first message.

It may be understood that, when the first device needs to perform feedback after frequency stitching (for example, the feedback policy indicated by the first information is any one of the foregoing feedback policies 3 to 6), the first device needs to determine phase information of the frequency bands, to implement frequency stitching.

In a possible design, the second device may further send second information to the first device.

The second information indicates an initial phase of at least one sensing packet (or a sensing fragment) on the plurality of frequency bands, for example, an initial phase of a sensing packet on each frequency band.

Alternatively, the second information indicates an initial phase difference between two adjacent sensing packets (or sensing fragments) on the plurality of frequency bands.

Alternatively, the second information indicates an initial phase difference between a 1^{st} sensing packet and a sensing packet other than the 1^{st} sensing packet on the plurality of frequency bands (or an initial phase difference between a 1^{st} sensing fragment and a sensing fragment other than the 1^{st} sensing fragment on the plurality of frequency bands).

During specific implementation, the second information may be carried in the first message, or the second information may be carried in another message. This is not limited in this application.

It may be understood that, to ensure that the first device can successfully receive the sensing packet after the second device sends the sensing packet, the first device needs to determine frequency domain resources on which the sensing packet is located, and then receive the sensing packet on the frequency domain resources.

In a possible design, the second device may further send one or more of the following information to the first device.
(1) Third information: The third information indicates a configuration order of center frequencies or carrier frequencies of the plurality of frequency bands.

In some embodiments, the configuration order of the center frequencies or the carrier frequencies of the plurality of frequency bands may be specifically implemented as that the center frequencies or the carrier frequencies of the plurality of frequency bands may change in a preset direction. For example, a change direction of the center frequencies or the carrier frequencies of the frequency bands is as follows: The center frequencies or the carrier frequencies of the plurality of frequency bands are in ascending order; or the center frequencies or the carrier frequencies of the plurality of frequency bands are in descending order. It may be understood that if the center frequencies or the carrier frequencies of the plurality of frequency bands are in ascending order, a center frequency or a carrier frequency of a 1^{st} frequency band in the plurality of frequency bands is the lowest. On the contrary, if the center frequencies or the carrier frequencies of the plurality of frequency bands are in descending order, a center frequency or a carrier frequency of a 1^{st} frequency band in the plurality of frequency bands is the highest.

For example, the plurality of frequency bands are a frequency band 1, a frequency band 2, and a frequency band 3. The frequency band 1 has a lowest center frequency, and the frequency band 3 has a highest center frequency. The second device may send the sensing packet on the frequency band 1, then send the sensing packet on the frequency band 2, and finally send the sensing packet on the frequency band 3 (that is, the center frequencies of the frequency bands configured for the first device to receive the sensing packets increases with time), or the second device may send the sensing packet on the frequency band 3, then send the sensing packet on the frequency band 2, and finally send the sensing packet on the frequency band 1 (that is, the center frequencies of the frequency bands configured for the first device to receive the sensing packets decreases with time). Certainly, the foregoing is merely an example rather than a limitation of the preset order of the frequency bands, and the frequency bands may alternatively be in another order.

For example, a larger center frequency of a frequency band indicates a larger index of a channel corresponding to the frequency band, or a larger center frequency of a frequency band indicates a smaller index of a channel corresponding to the frequency band. This is not limited in this application. That the center frequencies or the carrier frequencies of the plurality of frequency bands are in ascending order or descending order may also be described as that indexes of channels corresponding to the plurality of frequency bands are in ascending order or descending order.

Therefore, the first device and the second device transmit the sensing packet on a preset frequency band, to improve a success rate of sensing packet transmission, and further improve sensing reliability.

Alternatively, the configuration order of the center frequencies or the carrier frequencies of the plurality of frequency bands may not be indicated by the second device. For example, the configuration order of the center frequencies or the carrier frequencies of the plurality of frequency bands may be determined by the second device and the first device through negotiation, or may be predefined, or may be pre-configured, or may be indicated by the first device to the second device.

(2) Fourth information: The fourth information indicates an identifier of a 1^{st} frequency band in the plurality of frequency bands. The 1^{st} frequency band is a 1^{st} frequency band on which a sensing packet is transmitted, that is, a frequency band on which a 1^{st} sensing packet is located.

The identifier of the frequency band includes but is not limited to a center frequency, a carrier frequency, a channel index, or the like of the frequency band. For example, the first device sends the sensing packet on the frequency band 1, then sends the sensing packet on the frequency band 2, and finally sends the sensing packet on the frequency band 3. In this case, the second indication information may indicate a channel index, a carrier frequency, a center frequency, or the like of the frequency band 1.

(3) Fifth information: The fifth information indicates a frequency overlap rate between adjacent frequency bands in the plurality of frequency bands.

For example, the frequency overlap rate of adjacent frequency bands is 25%, 50%, or 75%.

(4) Sixth information: The sixth information indicates a total bandwidth of the plurality of frequency bands, or indicates a total quantity of sensing packets (or sensing fragments) on the plurality of frequency bands, or indicates a quantity of frequency bands, or the like.

In some embodiments, the quantity of frequency bands may be determined based on the total bandwidth of the plurality of frequency bands or the total quantity of sensing packets (or sensing fragments) on the plurality of frequency bands. Alternatively, the total bandwidth of the plurality of frequency bands may be determined based on the quantity of frequency bands or the total quantity of sensing packets (or sensing fragments) on the plurality of frequency bands. Alternatively, the total quantity of sensing packets (or sensing fragments) on the plurality of frequency bands may be determined based on the total bandwidth of the plurality of frequency bands or the quantity of frequency bands. Therefore, the total bandwidth of the plurality of frequency bands, the total quantity of sensing packets (or sensing fragments) on the plurality of frequency bands, the quantity of frequency bands may be replaced with each other.

One or more of the foregoing information (1) to (4) may be carried in the first message or another message. This is not limited in this application.

The first device may determine, based on the foregoing provided information, a frequency domain resource used for sensing packet exchange, to improve reliability of receiving the sensing packet by the first device, and further improve sensing reliability.

Optionally, the second device may further send seventh information to the first device. The seventh information indicates a quantity of sensing packets (or sensing fragments) sent by the second device on a single frequency band in the plurality of frequency bands. The seventh information may be carried in the first message or another message. This is not limited in this application. The first device may determine the quantity of sensing packets (or sensing fragments) on the single frequency band based on the provided seventh information, to further improve reliability of receiving the sensing packet by the first device.

In a possible design, the first device may sequentially perform frequency stitching for a plurality of times, and determine, based on an obtained sensing result, whether to end frequency stitching (in other words, the first device may control, based on the obtained sensing result, whether the second device continues to send the sensing packet).

For example, the second device sends the sensing packets on a first frequency band set (the first frequency band set includes at least two frequency bands), and the first device receives and detects the sensing packets on the first frequency band set.

If a sensing result corresponding to a plurality of frequency bands detected by the first device meet the sensing requirement, the first device sends the second message to the second device. The second message includes the sensing result corresponding to the plurality of frequency bands detected by the first device, the plurality of frequency bands detected by the first device are a part or all of frequency bands detected by the first device, and the plurality of frequency bands in S301 are the plurality of frequency bands detected by the first device (it may be understood that if the first device does not receive a sensing packet on another frequency band before receiving the sensing packets on the first frequency band set, the frequency bands detected by the first device are a part or all of the frequency bands in the first frequency band set; or if the first device further receives a sensing packet on another frequency band before receiving the sensing packets on the first frequency band set, the frequency bands detected by the first device are all the frequency bands in the first frequency band set and a part or all of the another frequency band on which the sensing packet is previously received).

If the sensing result corresponding to the plurality of frequency bands detected by the first device do not meet the sensing requirement, the first device sends indication information to the second device. The indication information indicates the second device to send the sensing packets on a second frequency band set (the second frequency band set includes at least two frequency bands), so that the first device can receive and detect the sensing packets on more frequency bands. The foregoing operations are repeated until a sensing result corresponding to a part or all of the frequency bands detected by the first device meet the sensing requirement or frequency bands that can be used for sensing are used up (for example, the second device sends the sensing packets on all available frequency bands, or a quantity of frequency bands used by the second device to send the sensing packets reaches a threshold, or the first device does not receive the sensing packet within preset duration).

The sensing requirement may be related to the feedback policy. For example, when the sensing result indicated by the feedback policy is the target information, the sensing requirement may be that a figure of merit (Figure of Merit, FoM) of the target information (for example, at least one of the distance, the speed, or the angle) reaches a figure of merit threshold. For example, when the sensing result indicated by the feedback policy is a CIR, the sensing requirement may be that a sampling rate of the CIR reaches a sampling rate threshold. Certainly, the foregoing is merely an example, and an actual application is not limited thereto.

It may be understood that a quantity of frequency bands in the first frequency band set may be the same as or different from a quantity of frequency bands in the second frequency band set. This is not limited in this application.

Therefore, frequency band overheads and feedback overheads can be reduced while sensing precision is ensured.

In a possible design, at least one frequency band in the first frequency band set and at least one frequency band in the second frequency band set overlap in terms of frequency, and a frequency overlap rate between the at least one frequency band in the first frequency band set and the at least one frequency band in the second frequency band set is greater than a frequency overlap rate between adjacent frequency bands in the first frequency band set. In other words, as a quantity of frequency bands detected by the first device increases, an overlap rate between the frequency bands also increases. Therefore, as a quantity of received sensing packets increases, precision of sensing result obtained by the first device also increases.

In a possible design, the second device may further send eighth information to the first device. The eighth information indicates the sensing requirement. For example, when the sensing result indicated by the feedback policy is the target information, the eighth information may include the figure of merit threshold. For example, when the sensing result indicated by the feedback policy is the CIR, the eighth information may include the sampling rate threshold. During specific implementation, the eighth information may be carried in the first message or another message. This is not limited in this application. Therefore, the first device may determine the sensing requirement, and further feed back the sensing result to the second device in time when the sensing requirement is met, to avoid a resource waste and improve sensing efficiency.

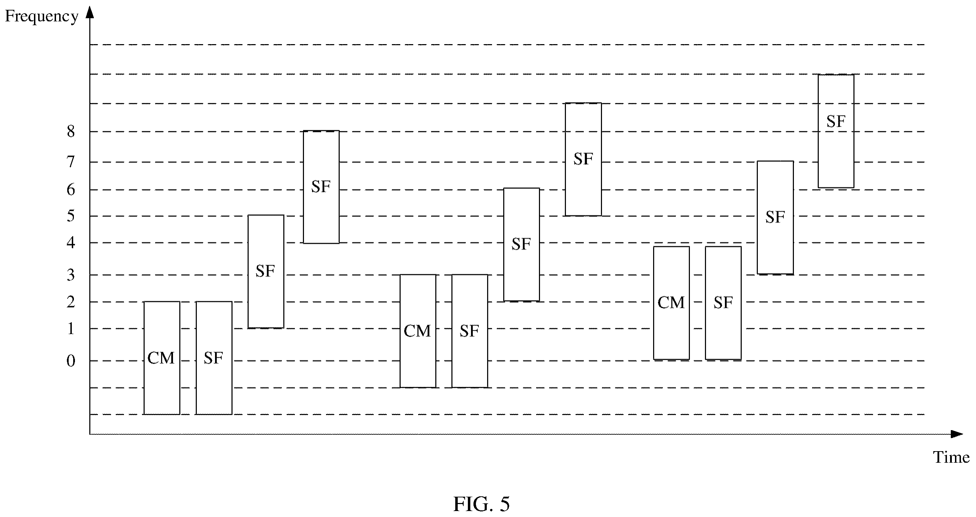

To better understand the foregoing solution, a specific example is used for description herein. FIG. 5 is a diagram of a multi-layer frequency stitching solution according to an embodiment of this application. The solution includes the following steps.

It is assumed that {C₀, C₁, C₂, ..., C_{N}} represents a list of frequency bands that can be used for frequency stitching. A bandwidth of each frequency band is 499.2 MHz, and a spacing between center frequencies of adjacent frequency bands is 124.8 MHz.

Step 1: The second device sequentially sends sensing packets on frequency bands {C₀, C₃, C₆, ... }, and the first device sequentially receives and detects the sensing packets on the frequency bands {C₀, C₃, C₆, ...}, where one or more sensing packets may be sent on each frequency band, a spacing between center frequencies of adjacent frequency bands in {C₀, C₃, C₆, ...} is 374.4 MHz, and an overlap rate between the adjacent frequency bands in {C₀, C₃, C₆, ... } is 25%.

Step 2: The first device performs frequency stitching on the frequency bands {C₀, C₃, C₆, ... }, and obtains a sensing result 1 (for example, a CIR or target information) from a large bandwidth obtained through current frequency stitching; and if the sensing result 1 meets the sensing requirement, the first device feeds back the sensing result 1 to the second device, and frequency stitching is completed; or if the sensing result 1 does not meet the sensing requirement, the first device end feeds back, to the second device, indication information indicating to continue to send a signal, and step 3 continues to be performed.

Step 3: The second device sequentially sends sensing packets on frequency bands {C₁, C₄, C₇, ... }, and the first device sequentially receives and detects the sensing packets on the frequency bands {C₁, C₄, C₇, ...}, where one or more sensing packets may be sent on each frequency band, a spacing between center frequencies of adjacent frequency bands in {C₁, C₄, C₇, ...} is 374.4 MHz, an overlap rate between the adjacent frequency bands in {C₁, C₄, C₇, ...} is 25%, and overlap rates between adjacent frequency bands in {C₀, C₃, C₆, ... } and {C₁, C₄, C₇, ...} are greater than 25%, for example, an overlap rate between C₀ and C₀ is 75%.

Step 4: The first device performs frequency stitching on the frequency bands: {C₀, C₃, C₆, ... } and {C₁, C₄, C₇, ... }, and obtains a sensing result 2 (for example, a CIR or target information) from a large bandwidth obtained through current frequency stitching; and if the sensing result 2 meets the sensing requirement, the first device feeds back the sensing result 2 to the second device, and frequency stitching is completed; or if the sensing result 2 does not meet the sensing requirement, the first device feeds back, to the second device, indication information indicating to continue to send a signal, and step 5 continues to be performed.

Step 5: The second device sequentially sends sensing packets on frequency bands {C₂, C₅, C₈, ... }, and the first device sequentially receives and detects the sensing packets on the frequency bands {C₂, C₅, C₈, ... }, where one or more sensing packets may be sent on each frequency band, a spacing between center frequencies of adjacent frequency bands in {C₂, C₅, C₈, ...} is 374.4 MHz, an overlap rate between the adjacent frequency bands in {C₂, C₅, C₈, ...} is 25%, and overlap rates between adjacent frequency bands in {C₀, C₃, C₆, ... } and {C₂, C₅, C₈, ...} are greater than 25%, for example, an overlap rate between C₁ and C₂ is 75%, and an overlap rate between C₄ and C₂ is 50%.

Step 6: The first device performs frequency stitching on the frequency bands: {C₀, C₃, C₆, ... }, {C₁, C₄, C₇, ... }, and {C₂, C₅, C₈, ... }, obtains a sensing result 3 (for example, a CIR or target information) from a large bandwidth obtained through current frequency stitching, and feeds back the sensing result 3 to the second device, and frequency stitching is completed.

In a sensing scenario, a range-Doppler map of the target may be constructed from a plurality of measured CIR in coherent processing time. The coherent processing time may be determined based on a relative speed and an effective bandwidth of the target. Measurement precision of each CIR can be improved through frequency stitching. Therefore, less time used for frequency stitching indicates that more measured CIRs can be obtained in the coherence processing time. In addition, if a CIR of each frequency band needs to be fed back, fewer frequency bands that participate in frequency stitching indicates fewer feedback overheads of CIRs. Therefore, in terms of a quantity of times of CIR measurement and overheads of CIRs, a smaller overlap between frequency bands that participate in frequency stitching is better. On the other hand, an overlap between frequency bands that participate in frequency stitching facilitates phase tracking, and is necessary in frequency stitching. Therefore, in terms of CIR precision, a larger overlap between frequency bands that participate in frequency stitching is better. Based on the foregoing solution, the quantity of times of CIR measurement, the feedback overheads of CIRs, and the CIR precision can be considered.

In a possible design, one or more pieces of the first information to the eighth information may be carried in the control message, and each piece of the first information to the eighth information may be implemented based on one field or a combination of a plurality of fields in the control message. For example, Table 1 is an example of content of the control message.

**Table 1 Control message**

| Field (Field) | Size (Size) | Description (Description) |
|---|---|---|
| First sensing fragment channel index (First SF Channel Index) | 4 bits | Index of a UWB channel on which a first sensing fragment is located |
| Frequency stitching direction (Frequency Stitching Direction) | 1 bit | 0: Center frequencies or carrier frequencies of subsequent channels are in ascending order. |
| | | 1: Center frequencies or carrier frequencies of subsequent channels are in descending order. |
| Overlapping factor (Overlapping Factor) | 2 bits | 00: 25% overlap; 01: 50% overlap; 10: 75% overlap; and 11: reserved |
| Sensing fragment number (SF Number) | 4 bits | Total quantity of sensing fragments included in current scheduling |
| Feedback control (Feedback Control) | 3 bits | 000: Each time after receiving one sensing fragment, a responder feeds back a CIR of the sensing fragment, where this mode is applicable to a low-cost device with limited storage |
| | | 001: After receiving a plurality of sensing fragments, the responder feeds back CIRs of the plurality of sensing fragments, where this mode is applicable to a scenario in which continuous sensing measurement is required |
| | | 010: Each time after frequency stitching, the responder feeds back a CIR of a frequency band obtained through current stitching, where this mode can reduce feedback overheads of CIRs, and is applicable to a device with a strong processing capability and limited storage |
| | | 011: After receiving a plurality of sensing fragments, the responder performs frequency stitching for a plurality of times, and feeds back CIRs of all frequency bands obtained through stitching, where this mode can reduce feedback overheads of CIRs, and is applicable to a device with a strong processing capability and to a scenario in which continuous sensing measurement is required |
| | | 100: After receiving a plurality of sensing fragments, the responder performs frequency stitching on the plurality of sensing fragments, and feeds back a CIR of a frequency band obtained through stitching |
| | | 101: After frequency stitching, the responder determines target information based on a CIR of a frequency band obtained through stitching, and feeds back the target information |
| | | 110: Reserved |
| | | 111: Reserved |
| Sensing fragment phase information (SF Phase Information) | 8 bits*SF number | Initial phase of each sensing fragment sent by an initiator |
| Feedback type (Feedback Type) | 1 bit | 1: Feed back original CIR data; and 0: feed back processed target information |
| Stitching requirement (Stitching Requirement) | Variable | If Feedback Type=1, figures of merit like a distance, a speed, and an angle are included, and each figure of merit has 8 bits. |
| | | If Feedback Type=0, a sampling rate of a CIR is included, and the sampling rate determines the distance resolution, and is directly proportional to an effective bandwidth. |
| Stitching method (Stitching Method) | 1 bit | 1: processing method of a usage frequency; and 0: not limited |

The feedback control (Feedback Control) field and the feedback type (Feedback Type) field correspond to the first information, the sensing fragment phase information (SF Phase Information) field corresponds to the second information, the frequency stitching direction (Frequency Stitching Direction) field corresponds to the third information, the first sensing fragment channel index (First SF Channel Index) field corresponds to the fourth information, the overlapping factor (Overlapping Factor) field corresponds to the fifth information, the sensing fragment number (SF Number) field corresponds to the sixth information, and the stitching requirement (Stitching Requirement) field corresponds to the eighth information.

For example, the processing method of a usage frequency in the stitching method (Stitching Method) field may include: transforming a CIR from time domain to frequency domain, to obtain a frequency domain CIR; adjusting the frequency domain CIR based on an overlap in frequency domain, to obtain a frequency domain CIR of a large bandwidth; filtering the frequency domain CIR of the large bandwidth; and transforming the frequency domain CIR of the large bandwidth to time domain.

It may be understood that a size of each field in Table 1 is an example, and may be adjusted based on an actual requirement. In addition, during actual application, the control message may include fewer fields than the foregoing fields or more fields than the foregoing fields, and may be adjusted based on an actual requirement.

It may be understood that actual content of the control message may include one or more items listed in Table 1.

The foregoing describes the content of the first message, and the following describes content of the second message.

It may be understood that the second message is a message fed back by the first device to the second device. Therefore, the second message may also be referred to as a feedback message. In the following, unless otherwise specified, the second message and the feedback message may be replaced with each other.

It may be understood that the second message includes at least the sensing result. An example in which a specific type of the sensing result is a CIR is used as an example of CIR content.

**Table 2 CIR content**

| Field (Field) | Size (Size) | Description (Description) |
|---|---|---|
| Timing offset of a reference tap (Timing Offset of the reference tap) | 6 bits | Interval between a first path and a first tap in a CIR report |
| Normalization factor for I/Q (Normalization factor for I/Q) | TBD | Normalization factor for I/Q |
| RSSI | TBD | Received signal strength indicator |
| CIR in-phase report (CIR In-Phase report) | 16 bits | Real part of a normalized CIR of each tap |
| CIR quadrature report (CIR Quadrature report) | 16 bits | Imaginary part of a normalized CIR of each tap |

It may be understood that a size of each field in Table 2 is an example, and may be adjusted based on an actual requirement. In addition, during actual application, the CIR content may include fewer fields than the foregoing fields or more fields than the foregoing fields, and may be adjusted based on an actual requirement.

In a possible design, the second message further includes ninth information, and the ninth information indicates that the sensing result is a CIR of a frequency band on which frequency stitching is not performed; or a CIR of a large bandwidth obtained through frequency stitching; or target information determined based on a CIR of a large bandwidth obtained through frequency stitching. It may be understood that the several types of information that may be indicated by the ninth information are merely examples rather than limitations. In a possible implementation, the sensing result included in the second message corresponds to the feedback policy indicated by the first information. Therefore, content indicated by the ninth information may also correspond to the feedback policy indicated by the first information. Therefore, the second device can determine a type of content of the sensing result carried in the second message.

In a possible design, the second message further includes tenth information, and the tenth information further indicates the frequency band corresponding to the sensing result.

For example, the tenth information includes an index of the frequency band corresponding to the sensing result. It may be understood that, if the frequency band corresponding to the sensing result is a frequency band on which frequency stitching is not performed, the tenth information may include an identifier (for example, a channel index) of each frequency band corresponding to the sensing result. If the frequency band corresponding to the sensing result is a large bandwidth obtained through frequency stitching, the tenth information may include an identifier of a frequency band that participates in frequency stitching.

For another example, the tenth information may include a bitmap (bitmap), the bitmap includes a plurality of bits, the plurality of bits one-to-one correspond to the plurality of frequency bands, and the frequency band corresponding to the sensing result is indicated by a value of a bit in the bitmap. For example, the plurality of frequency bands include frequency bands 1, 2, and 3. In this case, the bitmap may include 3 bits, a 1^{st} bit corresponds to the frequency band 1, a 2^{nd} bit corresponds to the frequency band 2, a 3^{rd} bit corresponds to the frequency band 3, and the frequency band corresponding to the sensing result is a frequency band corresponding to the bit whose value is 1. For example, when the bitmap is 111, it indicates that the sensing result corresponds to the frequency band 1, the frequency band 2, and the frequency band 3. When the bitmap is 101, it indicates that the sensing result corresponds to the frequency band 1 and the frequency band 3. It may be understood that this is merely an example, and an actual application is not limited thereto.

In a possible design, there is a correspondence between a frequency domain resource and a time domain resource. Therefore, the time domain resource is determined once the frequency domain resource is determined, or the frequency domain resource is determined once the time domain resource is determined. In this case, the frequency domain resource may be indicated by indicating the time domain resource.

For example, a plurality of frequency bands one-to-one correspond to a plurality of time units, and a sensing packet on each of the plurality of frequency bands is transmitted in a time unit corresponding to the frequency band. The time unit may be a symbol, a sensing slot, a sensing round, a sensing block, a frame, a subframe, or the like. This is not limited in this application. For example, in a slot 1, the first device and the second device transmit a sensing packet 1 on the frequency band 1. In a slot 2, the first device and the second device transmit a sensing packet 2 on the frequency band 2. In a slot 3, the first device and the second device transmit a sensing packet 3 on the frequency band 3.

In this case, the frequency band may be indirectly indicated by indicating the time unit. For example, the second message includes the tenth information, and the tenth information indicates a time unit (which is referred to as a time unit corresponding to the sensing result for short) corresponding to the frequency band corresponding to the sensing result.

Similarly, the tenth information includes an identifier of the time unit corresponding to the sensing result; or the tenth information includes a bitmap, the bitmap includes a plurality of bits, the plurality of bits one-to-one correspond to the plurality of time units, and the time unit corresponding to the sensing result is indicated by a value of a bit in the bitmap.

Therefore, the second device can determine the frequency band corresponding to the sensing result carried in the second message, to better calculate the target information, and improve sensing precision.

To better understand the foregoing solution, a specific example of content of the feedback message is used herein. Refer to Table 3. The feedback message may include common control information, frequency band information, and CIR content.

**Table 3 Content of a feedback message**

| |
|---|
| Common control information (Common Control) |
| Frequency band information (Channel Info.) |
| CIR content (CIR Content) |
| ... |
| CIR content (CIR Content) |

It may be understood that a manner of dividing the content of the feedback message shown in Table 3 is merely an example rather than a limitation. Actual content of the feedback message may include one or more items listed in Table 3.

Table 4 shows an example of content of the common control information (Common Control).

**Table 4 Content of common control information**

| Field (Field) | Size (Size) | Description (Description) |
|---|---|---|
| Receive antenna number (Rx antenna number) | 2 bits | Indicating a quantity of antennas of a receiver (namely, a first device) |
| Bitmap length (Bitmap length) | 8 bits | Indicating a length of a bitmap of taps |
| Bitmap (Bitmap) | Variable | Each bit of the bitmap indicates a tap, a bit corresponding to a tap that needs to be fed back is set to 1, and a bit corresponding to a tap that does not need to be fed back is set to 0 |
| CIR feedback indication (CIR feedback indication) | 1 bit | 0 indicates that CIR content is a CIR of a frequency band on which frequency stitching is not performed; and 1 indicates that CIR content is a CIR of a large bandwidth obtained through frequency stitching |

It may be understood that a size of each field in Table 4 is an example, and may be adjusted based on an actual requirement. In addition, during actual application, the common control information may include fewer fields than the foregoing fields or more fields than the foregoing fields, and may be adjusted based on an actual requirement. A value of each field may be adjusted based on an actual requirement.

The frequency band information (Channel Info.) may be implemented in a plurality of solutions. The following provides examples of several possible solutions.

Solution 1: The frequency band information directly indicates an identifier of a frequency band on which the sensing fragment is located, and the identifier of the frequency band is, for example, a channel index (Channel index). In this case, content of the frequency band information is shown in Table 5.

**Table 5 Content of frequency band information**

| Field (Field) | Size (Size) | Description (Description) |
|---|---|---|
| Frequency band information (channel Info.) | Variable (variable) | When CIR feedback indication=0, each piece of CIR content needs to be attached with an identifier of a frequency band on which a sensing fragment that generates the CIR content is located. |
| | | When CIR feedback indication=1, each piece of CIR content needs to be attached with an identifier of a frequency band that participates in current frequency stitching, or with identifiers of a start frequency band and an end frequency band of a sensing fragment that participates in current frequency stitching, or with an identifier of a start frequency band and a total quantity of frequency bands of a sensing fragment that participates in current frequency stitching. |

It may be understood that a size of each field in Table 5 is an example, and may be adjusted based on an actual requirement. In addition, during actual application, the frequency band information may include fewer fields than the foregoing fields or more fields than the foregoing fields, and may be adjusted based on an actual requirement. A value of each field may be adjusted based on an actual requirement.

Solution 2: The frequency band information (Channel Info.) is specifically a bitmap, and the bitmap indicates a frequency band on which a sensing fragment is located. Content of the bitmap is shown in Table 6A and Table 6B.

**Table 6A Content of frequency band information in a case in which CIR feedback indication=0**

| Field (Field) | Size (Size) | Description (Description) |
|---|---|---|
| Bitmap length (Bitmap Length) | 8 bits | Indicating a length of a bitmap, and corresponding to a total quantity of frequency bands in a current measurement report phase |
| Bitmap (Bitmap) | Variable | Each bit of the bitmap corresponds to a frequency band, a value 1 of a bit corresponding to a frequency band indicates that a CIR result of the frequency band is reported (that is, CIR content includes the CIR result of the frequency band), and a value 0 indicates that the CIR result of the frequency band is not reported (that is, the CIR content does not include the CIR result of the frequency band) |

It may be understood that a size of each field in Table 6A is an example, and may be adjusted based on an actual requirement. In addition, during actual application, the frequency band information may include fewer fields than the foregoing fields or more fields than the foregoing fields, and may be adjusted based on an actual requirement. A value of each field may be adjusted based on an actual requirement.

**Table 6B Content of frequency band information in a case in which CIR feedback indication=1**

| Field (Field) | Size (Size) | Description (Description) |
|---|---|---|
| Bitmap list length (Bitmap List Length) | 8 bits | Indicating a length of a bitmap list, and corresponding to a total quantity of frequency bands on which stitching is performed in a current measurement report phase |
| Bitmap list (Bitmap List) | Variable | Each bitmap list indicates a CIR of a frequency band on which stitching is performed, and specific content of the bitmap list may be shown in Table 7 |

It may be understood that a size of each field in Table 6B is an example, and may be adjusted based on an actual requirement. In addition, during actual application, the frequency band information may include fewer fields than the foregoing fields or more fields than the foregoing fields, and may be adjusted based on an actual requirement. A value of each field may be adjusted based on an actual requirement.

**Table 7 Bitmap list content**

| Field (Field) | Size (Size) | Description (Description) |
|---|---|---|
| Bitmap length (Bitmap Length) | 8 bits | Bitmap length, for example, equal to an identifier (for example, an end channel index) of an end frequency band that participates in current frequency stitching minus an identifier (for example, a start channel index) of a start frequency band, plus 1 |
| Bitmap (Bitmap) | Variable | Each bit of the bitmap corresponds to a frequency band, a value 1 of a bit corresponding to the frequency band indicates that the frequency band participates in current frequency stitching, and a value 0 of a bit corresponding to the frequency band indicates that the frequency band does not participate in current frequency stitching |

It may be understood that a bitmap length in each bitmap list = end channel index - start channel index + 1, but some channels from a start channel to an end channel may not participate in current frequency stitching. For example, a channel slot corresponding to a bit whose value is 0 does not participate in current frequency stitching.

It may be understood that a size of each field in Table 7 is an example, and may be adjusted based on an actual requirement. In addition, during actual application, the bitmap list content may include fewer fields than the foregoing fields or more fields than the foregoing fields, and may be adjusted based on an actual requirement. A value of each field may be adjusted based on an actual requirement.

Solution 3: The frequency band information is time unit information, and the frequency band information is indicated by the time unit information. It may be understood that there is a correspondence between the frequency band corresponding to the sensing fragment and the time unit corresponding to the sensing fragment, for example, a one-to-one correspondence. The corresponding frequency band may be determined based on the time unit. Therefore, the frequency band may be indicated by indicating the time unit. For example, content of the time unit information is shown in Table 8. A slot index (slot index) is used as an example of the time unit information. This is not limited thereto.

**Table 8 Content of time unit information**

| Field (Field) | Size (Size) | Description (Description) |
|---|---|---|
| Time unit information (sensing slot Info.) | Variable (variable) | When CIR feedback indication=0, each piece of CIR content needs to be attached with a slot index corresponding to a sensing fragment that generates the CIR content. |
| | | When CIR feedback indication=1, each piece of CIR content needs to be attached with a slot index corresponding to a sensing fragment that participates in current frequency stitching, or with a start slot index (start slot index) and an end slot index (end slot index) of a sensing fragment that participates in current frequency stitching, or with a start slot index (start slot index) and a total quantity of slots of a sensing fragment that participates in current frequency stitching. |

It may be understood that a size of each field in Table 8 is an example, and may be adjusted based on an actual requirement. In addition, during actual application, the time unit information may include fewer fields than the foregoing fields or more fields than the foregoing fields, and may be adjusted based on an actual requirement. A value of each field may be adjusted based on an actual requirement.

Solution 4: The frequency band information is the time unit information, and the time unit information is specifically a bitmap. The bitmap indicates a time unit, and content of the time unit information is shown in Table 9A and Table 9B.

**Table 9A Content of time unit information in a case in which CIR feedback indication=0**

| Field (Field) | Size (Size) | Description (Description) |
|---|---|---|
| Bitmap length (Bitmap Length) | 8 bits | Indicating a length of a bitmap, and corresponding to a total quantity of time units (or frequency bands) in a current measurement report phase |
| Bitmap (Bitmap) | Variable | Each bit of the bitmap corresponds to a time unit, a value 1 of a bit corresponding to a time unit indicates that a CIR result of the time unit is reported (that is, CIR content includes the CIR result of the time unit), and a value 0 indicates that the CIR result of the time unit is not reported (that is, the CIR content does not include the CIR result of the time unit) |

It may be understood that a size of each field in Table 9A is an example, and may be adjusted based on an actual requirement. In addition, during actual application, the time unit information may include fewer fields than the foregoing fields or more fields than the foregoing fields, and may be adjusted based on an actual requirement. A value of each field may be adjusted based on an actual requirement.

**Table 9B Content of time unit information in a case in which CIR feedback indication=1**

| Field (Field) | Size (Size) | Description (Description) |
|---|---|---|
| Bitmap list length (Bitmap List Length) | 8 bits | Indicating a length of a bitmap list, and corresponding to a total quantity of time units (or frequency bands) that participate in frequency stitching in a current measurement report phase |
| Bitmap list (Bitmap List) | Variable | Each bitmap list indicates a CIR of a frequency band on which stitching is performed, and specific content of the bitmap list may be shown in Table 10 |

It may be understood that a size of each field in Table 9B is an example, and may be adjusted based on an actual requirement. In addition, during actual application, the time unit information may include fewer fields than the foregoing fields or more fields than the foregoing fields, and may be adjusted based on an actual requirement. A value of each field may be adjusted based on an actual requirement.

**Table 10 Bitmap list content**

| Field (Field) | Size (Size) | Description (Description) |
|---|---|---|
| Bitmap length (Bitmap Length) | 8 bits | Bitmap length, for example, equal to an identifier (for example, an end slot index) of an end time unit that participates in current frequency stitching minus an identifier (for example, a start slot index) of a start frequency band, plus 1 |
| Bitmap (Bitmap) | Variable | Each bit of the bitmap corresponds to a time unit, a value 1 of a bit corresponding to the time unit indicates that a frequency band corresponding to the time unit participates in current frequency stitching, and a value 0 of a bit corresponding to the time unit indicates that the frequency band corresponding to the time unit does not participate in current frequency stitching |

It may be understood that a bitmap length in each bitmap list = end slot index - start slot index + 1, but some slots from a start slot to an end slot may not participate in current frequency stitching. For example, a slot corresponding to a bit whose value is 0 does not participate in current frequency stitching.

It may be understood that a size of each field in Table 10 is an example, and may be adjusted based on an actual requirement. In addition, during actual application, the bitmap list content may include fewer fields than the foregoing fields or more fields than the foregoing fields, and may be adjusted based on an actual requirement. A value of each field may be adjusted based on an actual requirement.

After receiving the second message sent by the first device, the second device may determine the target information based on the second message, for example, determine a speed, a distance, or an angle of the target. It may be understood that, if the sensing result in the second message is CIRs of a plurality of frequency bands on which frequency stitching is not performed, the first device may stitch the frequency bands, extract a CIR from a large bandwidth obtained through stitching, and then determine the target information based on the CIR extracted from the large bandwidth. If the sensing result in the second message is the CIR of the large bandwidth obtained through frequency stitching, the first device may extract the CIR from the large bandwidth obtained through stitching, and determine the target information based on the CIR extracted from the large bandwidth. If the sensing result in the second message is the target information, the first device may directly obtain the target information.

In a possible design, it is considered that not all UWB devices support frequency stitching, the second device and the first device may exchange a capability related to frequency stitching in a device association phase, a device discovery phase, or a device initialization phase.

For example, before receiving the first message from the second device, the first device may further send capability information of the first device to the second device. The capability information of the first device is used by the second device to determine the first message, for example, determine the first information.

Optionally, the capability information may include eleventh information, indicating that the first device supports or does not support receiving of sensing packets on the plurality of frequency bands.

Further, optionally, on a basis that the first device supports receiving of the sensing packets on the plurality of frequency bands, the capability information may further include twelfth information, indicating that the first device supports or does not support frequency stitching (or indicating whether the first device supports processing of a large bandwidth obtained through frequency stitching, for example, extracting a CIR of the large bandwidth).

Further, optionally, on a basis that the first device supports receiving of the sensing packets on the plurality of frequency bands and supports frequency stitching, the capability information may further include thirteenth information, indicating a frequency band allowed by the first device for frequency stitching.

Therefore, this can ensure reliability of frequency stitching, and further ensure reliability of sensing implemented through frequency stitching.

In the solution provided in S301 and S302, specific content of the message is provided, where the message is exchanged between the second device and the first device when the second device sends the sensing packet and the first device receives the sensing packet in the frequency stitching scenario. For example, the second device may indicate, based on the first information carried in the control message, the feedback policy for the sensing result corresponding to the plurality of frequency bands, so that the first device may feed back, according to the feedback policy indicated by the second device, a sensing result corresponding to at least one of the plurality of frequency bands. For example, the second device may further indicate a time-frequency resource of the sensing packet based on the control message, to ensure that the first device can accurately receive the sensing packet. For example, when the first device returns the second message to the second device, in addition to the sensing result (for example, the CIR), the second message may further carry information about the frequency band corresponding to the sensing result (for example, the content of the sensing result corresponds to a frequency band on which frequency stitching is not performed, a large bandwidth obtained through frequency stitching, or an identifier of a frequency band). Based on this solution, a UWB system can implement sensing through frequency stitching, to improve sensing performance of the UWB system.

The foregoing describes the solution in the scenario in which the second device sends the sensing packet to the first device, and the following describes a solution in a scenario in which the first device sends the sensing packet to the second device.

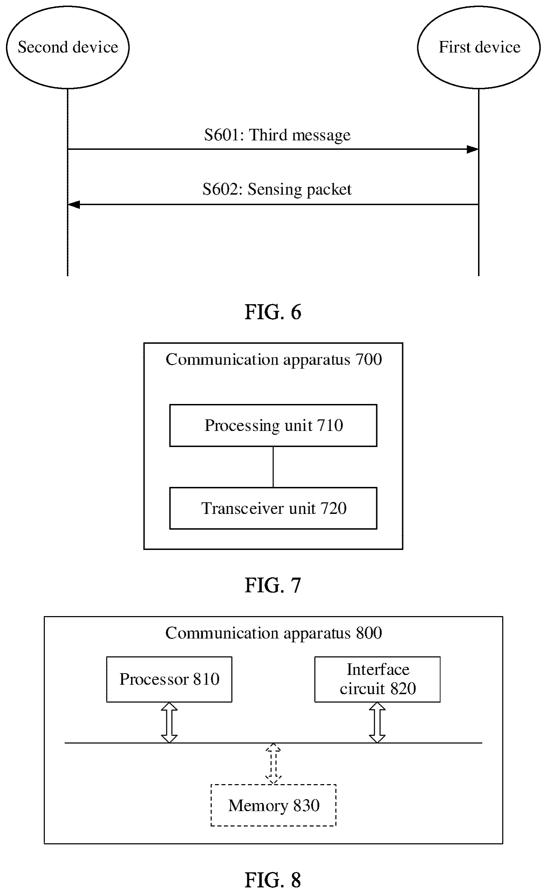

FIG. 6 is a flowchart of another sensing method according to an embodiment of this application. The method may be applied to the system shown in FIG. 1 or FIG. 2. In the method, an example in which a first device sends a sensing packet to a second device (it may be understood that, unless otherwise specified, the sensing packet in the following may be replaced with a sensing fragment) is used. The method includes the following steps.

S601: The second device sends a third message to the first device, and the first device receives the third message from the second device.

The third message indicates a sending policy for sending sensing packets by the first device on a plurality of frequency bands, and the plurality of frequency bands are used for frequency stitching. The second device may be an initiator, and the first device may be a responder.

In a possible design, the third message includes fourteenth information, and the fourteenth information indicates a configuration order of center frequencies or carrier frequencies of the plurality of frequency bands. For example, a change direction of the center frequencies or the carrier frequencies of the plurality of frequency bands is as follows: The center frequencies or the carrier frequencies of the plurality of frequency bands are in ascending order or descending order. For specific implementation of the configuration order, refer to the specific implementation of the configuration order in the embodiment shown in FIG. 3. Details are not described herein again.

In a possible design, the third message may include one or more of the following information:
(1) fifteenth information, indicating an identifier of a 1^{st} frequency band in the plurality of frequency bands, where for specific implementation of the fifteenth information, refer to the specific implementation of the fourth information, and details are not described herein again;
(2) sixteenth information, indicating a frequency overlap rate between adjacent frequency bands in the plurality of frequency bands, where for specific implementation of the sixteenth information, refer to the specific implementation of the fifth information, and details are not described herein again; and
(3) seventeenth information, indicating a total bandwidth of the plurality of frequency bands, where for specific implementation of the seventeenth information, refer to the specific implementation of the sixth information, and details are not described herein again.

In a possible design, the third message may further include eighteenth information, and the eighteenth information indicates a quantity of sensing packets sent by the first device on a single frequency band in the plurality of frequency bands. For specific implementation of the eighteenth information, refer to the specific implementation of the seventh information. Details are not described herein again.

The policy for sending the sensing packet by the first device may be determined based on one or more of the foregoing information, to ensure reliability of exchanging the sensing packet between the second device and the first device.

S602: The first device sends the sensing packet on the plurality of frequency bands based on the third message, and the second device receives the sensing packets on the plurality of frequency bands.

For example, the sensing packets are sent on the plurality of frequency bands based on the configuration order indicated by the fourteenth information. For example, a preset quantity of sensing packets are sent on a single frequency band based on the eighteenth information.

After receiving the sensing packets on the plurality of frequency bands, the second device detects the sensing packets, to obtain a sensing result corresponding to the plurality of frequency bands; and determines target information based on the sensing result. For specific implementation of the sensing result, the target information, and the like, refer to related descriptions of the sensing result, the target information, and the like in the embodiment shown in FIG. 3. Details are not described herein again.

In the solution provided in S601 and S602, specific content of the message is provided, where the message is exchanged between the second device and the first device when the first device sends the sensing packet and the second device receives the sensing packet in the frequency stitching scenario. For example, the second device may send the third message to the first device, to indicate the sending policy for sending the sensing packets by the first device on the plurality of frequency bands. Further, the first device may send the sensing packets on the plurality of frequency bands according to the sending policy indicated by the second device, to support the second device in performing frequency stitching and determining the sensing result and/or the target information based on a large bandwidth obtained through frequency stitching. Based on this solution, a UWB system can implement sensing through frequency stitching, to improve sensing performance of the UWB system.

It may be understood that, to implement the functions in the foregoing embodiments, the second device and the first device include corresponding hardware structures and/or software modules for performing the functions. A person skilled in the art should be easily aware that, with reference to units and method steps in the examples described in embodiments disclosed in this application, this application can be implemented by hardware or a combination of hardware and computer software. Whether a function is performed through hardware or hardware driven by computer software depends on particular application scenarios and design constraint conditions of the technical solutions.

FIG. 7 and FIG. 8 are diagrams of possible structures of communication apparatuses according to embodiments of this application. The communication apparatuses may be configured to implement functions of the second device and the first device in the foregoing method embodiments, and therefore can also implement beneficial effect of the foregoing method embodiments.

As shown in FIG. 7, a communication apparatus 700 includes a processing unit 710 and a transceiver unit 720. The communication apparatus 700 is configured to implement the functions of the second device or the first device in the method embodiment shown in FIG. 3 or FIG. 6.

When the communication apparatus 700 is configured to implement the functions of the first device in the method embodiment shown in FIG. 3, the transceiver unit 720 is configured to receive a first message from a second device. The first message includes first information, the first information indicates a feedback policy for a sensing result corresponding to a plurality of frequency bands, and the plurality of frequency bands are used for frequency stitching. The processing unit 710 is configured to generate a second message based on the first message, and control the transceiver unit 720 to send the second message to the second device. The second message includes a sensing result corresponding to at least one of the plurality of frequency bands.

When the communication apparatus 700 is configured to implement the functions of the second device in the method embodiment shown in FIG. 3, the processing unit 710 is configured to generate a first message. The transceiver unit 720 is configured to send the first message, and receive a second message from a first device.

When the communication apparatus 700 is configured to implement the functions of the first device in the method embodiment shown in FIG. 6, the transceiver unit 720 is configured to receive a third message from a second device. The third message indicates a sending policy for sending sensing packets by a first device on a plurality of frequency bands, and the plurality of frequency bands are used for frequency stitching. The processing unit 710 is used by the first device to generate the sensing packets based on the third message, and control the transceiver unit 720 to send the sensing packets on the plurality of frequency bands.

When the communication apparatus 700 is configured to implement the functions of the second device in the method embodiment shown in FIG. 6, the processing unit 710 generates a third message. The transceiver unit 720 is configured to send the third message, and receive sensing packets on a plurality of frequency bands. The third message indicates a sending policy for sending sensing packets by a first device on the plurality of frequency bands, and the plurality of frequency bands are used for frequency stitching.

It should be understood that all related content of the steps in the foregoing method embodiments may be cited in function descriptions of the corresponding functional modules. Details are not described herein.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the method shown in FIG. 3 or FIG. 6, the processor 810 may be configured to implement the functions of the processing unit 710, and the interface circuit 820 may be configured to implement the functions of the transceiver unit 720.

It should be noted that the processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, to enable the processor to read information from the storage medium and write the information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are/is consistent and may be mutually referenced, and technical features in different embodiments may be combined based on an internal logical relationship thereof, to form a new embodiment.

It may be understood that various numbers in embodiments of this application are merely for distinguishing for ease of description, and are not intended to limit the scope of embodiments of this application. Sequence numbers of the foregoing processes do not mean execution sequences. The execution sequences of the processes should be determined based on functions and internal logic of the processes.

## Claims

1. A sensing method, comprising:
receiving, by a first device, a first message from a second device, wherein the first message comprises first information, the first information indicates a feedback policy for a sensing result corresponding to a plurality of frequency bands, and the plurality of frequency bands are used for frequency stitching; and
sending, by the first device, a second message to the second device based on the first message, wherein the second message comprises a sensing result corresponding to at least one of the plurality of frequency bands.

2. The method according to claim 1, wherein
the first information indicates the first device to feed back a channel impulse response CIR of any one of the plurality of frequency bands to the second device after the first device receives a sensing packet on the any frequency band; or
the first information indicates the first device to feed back a CIR of at least one of the plurality of frequency bands to the second device after the first device receives sensing packets on all of the plurality of frequency bands; or
the first information indicates the first device to feed back, to the second device after the first device completes any time of frequency stitching, a CIR of a large bandwidth obtained through the any time of frequency stitching, wherein the large bandwidth obtained through the any time of frequency stitching is determined based on a part or all of the plurality of frequency bands; or
the first information indicates the first device to feed back, to the second device after the first device completes a plurality of times of frequency stitching, a CIR of a large bandwidth obtained through at least one of the plurality of times of frequency stitching, wherein a large bandwidth obtained through any one of the plurality of times of frequency stitching is determined based on a part or all of the plurality of frequency bands; or
the first information indicates the first device to feed back, to the second device after the first device performs frequency stitching on the plurality of frequency bands, a CIR of a large bandwidth obtained through frequency stitching; or
the first information indicates the first device to feed back target information to the second device after the first device determines the target information based on completion of frequency stitching on at least two of the plurality of frequency bands and a CIR of a large bandwidth obtained through frequency stitching.

3. The method according to claim 1 or 2, wherein the first message further comprises second information, and the second information indicates:
an initial phase of at least one sensing packet on the plurality of frequency bands; or
an initial phase difference between two adjacent sensing packets on the plurality of frequency bands; or
an initial phase difference between a 1^{st} sensing packet and a sensing packet other than the 1^{st} sensing packet on the plurality of frequency bands.

4. The method according to any one of claims 1 to 3, wherein the first message further comprises third information, and the third information indicates a configuration order of center frequencies or carrier frequencies of the plurality of frequency bands.

5. The method according to claim 4, wherein a change direction of the center frequencies or the carrier frequencies of the plurality of frequency bands is as follows:
the center frequencies or the carrier frequencies of the plurality of frequency bands are in ascending order; or
the center frequencies or the carrier frequencies of the plurality of frequency bands are in descending order.

6. The method according to claim 4 or 5, wherein the first message further comprises one or more of the following information:
fourth information, indicating an identifier of a 1^{st} frequency band in the plurality of frequency bands;
fifth information, indicating a frequency overlap rate between adjacent frequency bands in the plurality of frequency bands; and
sixth information, indicating a total bandwidth of the plurality of frequency bands.

7. The method according to any one of claims 1 to 6, wherein the first message comprises seventh information, and the seventh information indicates a quantity of sensing packets sent by the second device on a single frequency band in the plurality of frequency bands.

8. The method according to any one of claims 1 to 7, wherein the sending, by the first device, a second message to the second device based on the first message comprises:
receiving and detecting, by the first device, sensing packets on a first frequency band set, wherein the first frequency band set comprises at least two frequency bands; and
if a sensing result corresponding to a plurality of frequency bands detected by the first device meet a sensing requirement, sending, by the first device, the second message to the second device, wherein the second message comprises the sensing result corresponding to the plurality of frequency bands detected by the first device, and the plurality of frequency bands are a part or all of frequency bands detected by the first device.

9. The method according to claim 8, wherein the method further comprises:
if the sensing result corresponding to the plurality of frequency bands detected by the first device do not meet the sensing requirement, sending, by the first device, indication information to the second device, wherein the indication information indicates the second device to send sensing packets on a second frequency band set, the second frequency band set comprises at least two frequency bands, and the frequency bands in the second frequency band set are different from the frequency bands in the first frequency band set.

10. The method according to claim 9, wherein at least one frequency band in the first frequency band set and at least one frequency band in the second frequency band set overlap in terms of frequency, and a frequency overlap rate between the at least one frequency band in the first frequency band set and the at least one frequency band in the second frequency band set is greater than a frequency overlap rate between adjacent frequency bands in the first frequency band set.

11. The method according to claim 9 or 10, wherein the first message further comprises eighth information, and the eighth information indicates the sensing requirement.

12. The method according to any one of claims 1 to 11, wherein the second message further comprises ninth information, and the ninth information indicates that the sensing result is as follows:
a CIR of a frequency band on which frequency stitching is not performed; or
a CIR of a large bandwidth obtained through frequency stitching; or
target information determined based on a CIR of a large bandwidth obtained through frequency stitching.

13. The method according to claim 12, wherein the second message further comprises tenth information, and the tenth information further indicates the frequency band corresponding to the sensing result.

14. The method according to claim 13, wherein
the tenth information comprises an index of the frequency band corresponding to the sensing result; or
the tenth information comprises a bitmap, the bitmap comprises a plurality of bits, the plurality of bits one-to-one correspond to the plurality of frequency bands, and the frequency band corresponding to the sensing result is indicated by a value of a bit in the bitmap.

15. The method according to claim 12, wherein the plurality of frequency bands one-to-one correspond to a plurality of time units, and a sensing packet on each of the plurality of frequency bands is transmitted in a time unit corresponding to each frequency band; and
the second message further comprises tenth information, and the tenth information indicates a time unit corresponding to the sensing result.

16. The method according to claim 15, wherein
the tenth information comprises an index of the time unit corresponding to the sensing result; or
the tenth information comprises a bitmap, the bitmap comprises a plurality of bits, the plurality of bits one-to-one correspond to the plurality of time units, and an index of the time unit corresponding to the sensing result is indicated by a value of a bit in the bitmap.

17. The method according to any one of claims 1 to 13, wherein before the receiving, by a first device, a first message from a second device, the method further comprises:
sending, by the first device, capability information of the first device to the second device, wherein the capability information of the first device is used by the second device to determine the first message, wherein
the capability information comprises one or more of the following:
eleventh information, indicating that the first device supports or does not support receiving of sensing packets on the plurality of frequency bands;
twelfth information, indicating that the first device supports or does not support frequency stitching; and
thirteenth information, indicating a frequency band allowed by the first device for frequency stitching.

18. A sensing method, comprising:
sending, by a second device, a first message to a first device, wherein the first message comprises first information, the first information indicates a feedback policy for a sensing result corresponding to a plurality of frequency bands, and the plurality of frequency bands are used for frequency stitching; and
receiving, by the second device, a second message from the first device, wherein the second message comprises a sensing result corresponding to at least one of the plurality of frequency bands.

19. A sensing method, comprising:
receiving, by a first device, a third message from a second device, wherein the third message indicates a sending policy for sending sensing packets by the first device on a plurality of frequency bands, and the plurality of frequency bands are used for frequency stitching; and
sending, by the first device, the sensing packets on the plurality of frequency bands based on the third message.

20. The method according to claim 19, wherein the third message further comprises fourteenth information, and the fourteenth information indicates a configuration order of center frequencies or carrier frequencies of the plurality of frequency bands.

21. The method according to claim 20, wherein a change direction of the center frequencies or the carrier frequencies of the plurality of frequency bands is as follows:
the center frequencies or the carrier frequencies of the plurality of frequency bands are in ascending order; or
the center frequencies or the carrier frequencies of the plurality of frequency bands are in descending order.

22. The method according to any one of claims 19 to 21, wherein the third message comprises one or more of the following information:
fifteenth information, indicating an identifier of a 1^{st} frequency band in the plurality of frequency bands;
sixteenth information, indicating a frequency overlap rate between adjacent frequency bands in the plurality of frequency bands; and
seventeenth information, indicating a total bandwidth of the plurality of frequency bands.

23. The method according to any one of claims 19 to 22, wherein the third message comprises eighteenth information, and the eighteenth information indicates a quantity of sensing packets sent by the first device on a single frequency band in the plurality of frequency bands.

24. A sensing method, comprising:
sending, by a second device, a third message to a first device, wherein the third message indicates a sending policy for sending sensing packets by the first device on a plurality of frequency bands, and the plurality of frequency bands are used for frequency stitching; and
receiving, by the second device, the sensing packets from the first device on the plurality of frequency bands.

25. A communication apparatus, comprising:
a transceiver unit, configured to receive a first message from a second device, wherein the first message comprises first information, the first information indicates a feedback policy for a sensing result corresponding to a plurality of frequency bands, and the plurality of frequency bands are used for frequency stitching; and
a processing unit, configured to generate a second message based on the first message, and control the transceiver unit to send the second message to the second device, wherein the second message comprises a sensing result corresponding to at least one of the plurality of frequency bands, wherein
the transceiver unit is further configured to send the second message.

26. A communication apparatus, comprising:
a processing unit, configured to generate a first message, wherein the first message comprises first information, the first information indicates a feedback policy for a sensing result corresponding to a plurality of frequency bands, and the plurality of frequency bands are used for frequency stitching; and
a transceiver unit, configured to send the first message to a first device, and receive a second message from the first device, wherein the second message comprises a sensing result corresponding to at least one of the plurality of frequency bands.

27. A communication apparatus, comprising:
a transceiver unit, configured to receive a third message from a second device, wherein the third message indicates a sending policy for sending, on a plurality of frequency bands, sensing packets by a first device in which the apparatus is located, and the plurality of frequency bands are used for frequency stitching; and
a processing unit, configured to generate the sensing packets based on the third message, and control the transceiver unit to send the sensing packets on the plurality of frequency bands.

28. A communication apparatus, comprising:
a processing unit, configured to generate a third message, wherein the third message indicates a sending policy for sending sensing packets by a first device on a plurality of frequency bands, and the plurality of frequency bands are used for frequency stitching; and
a transceiver unit, configured to send the third message to the first device, and receive the sensing packets from the first device on the plurality of frequency bands.

29. A communication apparatus, comprising a processor and an interface circuit, wherein the processor is coupled to the interface circuit, and the processor is configured to execute a computer program or instructions, so that the apparatus performs the method according to any one of claims 1 to 17, or the method according to claim 18, or the method according to any one of claims 19 to 23, or the method according to claim 24.

30. A computer-readable storage medium, comprising a program or instructions, wherein when the program or the instructions are run on a computer, the method according to any one of claims 1 to 17, or the method according to claim 18, or the method according to any one of claims 19 to 23, or the method according to claim 24 is performed.
